# FASCICULE DE BREVET EUROPEEN

(11) **EP 4 027 244 B1**
(45) Date de publication et mention de la délivrance du brevet: **08.11.2023**
(21) Numéro de dépôt: 22150428.5
(22) Date de dépôt: 06.01.2022
(51) Int. Cl.: G06F 11/16, G01C 23/00, G06F 3/14, G06F 11/18, G09G 3/00

(54) **PROCÉDÉ DE SURVEILLANCE DE L' EXÉCUTION D'UNE CHAINE DE CALCUL GRAPHIQUE ET D' AFFICHAGE ASSOCIÉE À UN ÉCRAN DE VISUALISATION DE COCKPIT D AÉRONEF**
VERFAHREN ZUM ÜBERWACHEN DER AUSFÜHRUNG EINER GRAFISCHEN BERECHNUNGS- UND ANZEIGEKETTE, DIE EINEM ANZEIGEBILDSCHIRM EINES FLUGZEUGCOCKPITS ZUGEORDNET IST
METHOD FOR MONITORING THE EXECUTION OF A GRAPHICAL CALCULATION AND DISPLAY CHAIN ASSOCIATED WITH AN AIRCRAFT COCKPIT DISPLAY SCREEN

(30) Priorité: 08.01.2021 FR 2100154
(43) Date de publication de la demande: 13.07.2022
(73) Titulaire: THALES, 92400 Courbevoie (FR)
(72) Inventeur: CHABOT, Philippe, 33700 MERIGNAC (FR)
(74) Mandataire: Lavoix

(56) Documents cités:
- DE-A1- 10 229 342
- US-A1- 2019 286 115
- US-B1- 9 892 479
- US-B2- 7 724 260

## Description

La présente invention concerne un procédé de surveillance de l'exécution d'une première chaine de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant :
- un module d'acquisition configuré pour acquérir et calculer une pluralité de paramètres d'entrée/sortie de ladite première chaine de calcul graphique,
- un module de calcul configuré pour déterminer, pour chaque paramètre de ladite pluralité, au moins une liste de commandes graphiques propre à générer une symbologie associée à représenter,
- un module graphique configuré pour générer une image comprenant la symbologie associée à chaque paramètre, à partir de ladite au moins une liste de commandes graphiques respectivement associée à chaque paramètre de ladite pluralité,
- un module d'affichage configuré pour afficher ladite image comprenant la symbologie associée à chaque paramètre, sur l'écran de visualisation associé à ladite chaine de calcul graphique et d'affichage.

La présente invention concerne aussi un programme d'ordinateur comportant des instructions logicielles qui, lorsqu'elles sont exécutées par un ordinateur, mettent en oeuvre un tel procédé de surveillance.

La présente invention concerne également un dispositif électronique de surveillance de l'exécution d'une première chaine de calcul graphique et d'affichage associée à un premier écran de visualisation de cockpit d'aéronef, le cockpit d'aéronef comprenant une pluralité d'écrans de visualisation distincts, chacun associé à sa propre chaine de calcul graphique et d'affichage.

La présente invention concerne également un équipement avionique comprenant ladite première chaine de calcul graphique et un tel dispositif électronique de surveillance.

La présente invention concerne également un aéronef comprenant un tel dispositif électronique de surveillance ou un tel équipement avionique. Par la suite, par aéronef, on entend des aéronefs pilotés tels que des avions, des hélicoptères mais également des aéronefs télé-opérés tels que des drones.

La présente invention concerne de manière générale le domaine des calculateurs graphiques et visualisations embarquées avioniques dans un cockpit d'aéronef nécessitant une intégrité compatible avec la sécurité du vol.

De manière connue en soi, les calculateurs graphiques et visualisations des cockpits d'aéronefs doivent assurer une forte intégrité des paramètres de vol utilisés par les pilotes. En effet, une erreur d'affichage sur les paramètres critiques, utilisés pour piloter (attitudes, vitesse, altitude, etc.) ou pour surveiller les systèmes avioniques (moteur(s), niveau de carburant, éléments hydrauliques, etc.), pourrait entrainer un effet catastrophique.

Une solution actuelle repose sur un principe de surveillance de l'affichage d'une visualisation dans le cockpit, fournie par une chaine de calcul graphique et d'affichage, par une autre chaine de calcul indépendante, dite de surveillance, impliquant des échanges à faible latence (ou retard) au travers du réseau de communication avionique ou de réseau(x) de communication dédié(s). Afin d'éviter que les seuils de comparaison soient trop importants et donc sans intérêt pour la sécurité du vol, il faut garantir des latences (retards) extrêmement faibles de l'ordre de quelques dizaines de millisecondes.

Cependant avec cette solution basée sur un calcul de surveillance complet redondant de la chaine de calcul graphique et d'affichage à surveiller, en cas de détection d'écart entre chaine de calcul graphique et d'affichage à surveiller et chaine de surveillance, il n'est pas possible d'identifier la chaine en cause. Il en résulte que la sanction revient à l'équipage par fourniture d'un message requérant une vérification de la part de l'équipage et par conséquent une charge de travail supplémentaire pour comparer les données de vols affichées par la chaine de calcul graphique et d'affichage à surveiller avec un instrument secours.

US9892479 B1 (PRUITT JAMES S [US]) décrit un système de surveillance de l'exécution d'une chaîne de calcul graphique associée à un écran de visualisation de cockpit d'un aéronef.

DE10229342 A1 (BOSCH GMBH ROBERT [DE]) concerne également la surveillance de l'exécution d'une chaîne de calcul graphique dans le domaine automobile.

US7724260 B2 (HONEYWELL INT INC [US]) décrit un procédé de vérification du rendu d'une image dans un contexte avionique, le but de ce document étant de vérifier notamment l'exactitude de l'affichage de différents indicateurs de l'aéronef, tels que la ligne d'horizon, la vitesse air et l'altitude.

US2019/286115 A1 (WANG XINXIN [US]) concerne des procédés et systèmes de prévention et de détection d'informations erronées hasardeuses dans des dispositifs d'affichage critiques en matière de sécurité au sein d'un cockpit d'aéronef.

Le but de l'invention est alors de proposer une solution à ce problème en évitant de requérir une intervention de l'équipage tout en localisant et sanctionnant automatiquement (i.e. sans intervention humaine) tout dysfonctionnement d'affichage.

L'invention est décrite dans les revendications indépendantes. Les revendications dépendantes décrivent d'autres modes de réalisation préférés de l'invention.

A cet effet, l'invention a pour objet un procédé de surveillance de l'exécution d'une première chaine de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant au moins :
+ un module d'acquisition configuré pour acquérir et calculer une pluralité de paramètres d'entrée/sortie de ladite première chaine de calcul graphique,
+ un module de calcul configuré pour déterminer, pour chaque paramètre de ladite pluralité, au moins une liste de commandes graphiques propre à générer une symbologie associée à représenter,
+ un module graphique configuré pour générer une image comprenant la symbologie associée à chaque paramètre, à partir de ladite au moins une liste de commandes graphiques respectivement associée à chaque paramètre de ladite pluralité,
+ un module d'affichage configuré pour afficher ladite image comprenant la symbologie associée à chaque paramètre, sur l'écran de visualisation associé à ladite chaine de calcul graphique et d'affichage,
le procédé étant mis en oeuvre par un dispositif électronique de surveillance associé localement à ladite première chaine de calcul graphique et d'affichage, le procédé comprenant les étapes suivantes, pour au moins un paramètre de ladite pluralité :
   - duplication et insertion de ladite au moins une liste de commandes graphiques associée audit paramètre au sein dudit module de calcul,
   - à partir d'une valeur courante et dynamique dudit paramètre, obtention d'un code de redondance cyclique courant associé à un micro-motif courant généré par exécution de ladite au moins une liste de commandes graphiques dupliquée associée audit paramètre,
   - comparaison dudit code de redondance cyclique courant associé au micro-motif courant, à un code de redondance cyclique de référence associé à un micro-motif de référence obtenu et stocké au préalable dans un espace mémoire dédié au sein dudit dispositif électronique de surveillance pour une valeur sensiblement identique dudit paramètre à un seuil de tolérance près propre audit paramètre,
   - en cas d'écart de valeur de code de redondance cyclique, entre ledit code de redondance cyclique courant associé à un micro-motif courant et ledit code de redondance cyclique de référence associé à un micro-motif de référence, sanction automatique de ladite première chaine de calcul graphique et d'affichage par mise en oeuvre d'au moins une suspension de son exécution.

Suivant d'autres aspects avantageux de l'invention, le procédé de surveillance comprend une ou plusieurs des caractéristiques suivantes, prises isolément ou suivant toutes les combinaisons techniquement possibles :
- ledit micro-motif courant, est configuré pour être affiché dans une zone du premier écran non visible d'un pilote dudit aéronef ;
- le procédé comprend en outre au préalable, pour ledit au moins un paramètre de ladite pluralité :
   - la réception de la valeur courante et dynamique dudit paramètre, reçue par le module d'acquisition de ladite première chaine de calcul graphique, en provenance directe d'un capteur appartenant à une pluralité de capteurs dudit aéronef,
   - la réception d'au moins un code de redondance cyclique encapsulant une valeur dudit paramètre, reçue, puis transmise audit dispositif électronique de surveillance, par ledit module d'acquisition de ladite première chaine de calcul graphique et d'affichage, en provenance d'une chaine de calcul graphique et d'affichage associée à un écran de visualisation dudit cockpit d'aéronef distinct dudit premier écran de visualisation, et
   - la vérification de ladite valeur courante et dynamique dudit paramètre par détermination de l'écart entre:
   - la valeur courante et dynamique dudit paramètre, reçue par le module d'acquisition de ladite première chaine de calcul graphique, en provenance directe d'un capteur appartenant à une pluralité de capteurs dudit aéronef, et
   - au moins une valeur associée dudit paramètre, déterminée respectivement à partir dudit au moins un code de redondance cyclique encapsulant une valeur dudit paramètre ;
   - en cas d'écart supérieur à un premier seuil prédéterminé de valeur dudit paramètre résultant de ladite détermination d'écart, sanction automatique de ladite première chaine de calcul graphique et d'affichage par mise en oeuvre d'au moins une suspension de son exécution.
- la vérification met en oeuvre un vote lorsqu'au moins deux codes de redondance cyclique encapsulant une valeur d'un même paramètre sont reçus sensiblement simultanément en provenance d'au moins deux chaines distinctes de calcul graphique et d'affichage associées respectivement à au moins deux écrans de visualisation distincts dudit cockpit d'aéronef et distincts dudit premier écran de visualisation ;
- le procédé comprend en outre :
   - la réception de la valeur dudit paramètre déterminée pour affichage par le module de calcul de ladite première chaine de calcul graphique à partir de la valeur courante et dynamique dudit paramètre, reçue par le module d'acquisition de ladite première chaine de calcul graphique,
   - la comparaison de la valeur dudit paramètre déterminée pour affichage et de la valeur courante et dynamique dudit paramètre, reçue par le module d'acquisition de ladite première chaine de calcul graphique, en provenance directe d'un capteur appartenant à une pluralité de capteurs dudit aéronef, et en cas d'écart supérieur à un deuxième seuil prédéterminé de valeur dudit paramètre, sanction automatique de ladite première chaine de calcul graphique et d'affichage par mise en oeuvre d'au moins une suspension de son exécution.
- le procédé comprend en outre, préalablement à l'obtention d'un code de redondance cyclique courant associé à un micro-motif courant généré par exécution de ladite au moins une liste de commandes graphiques dupliquée associée audit au moins un paramètre, une étape de détermination d'une valeur de référence approchée de la valeur courante et dynamique dudit au moins un paramètre, en fonction dudit seuil de tolérance propre audit au moins un paramètre.

L'invention a également pour objet un programme d'ordinateur comportant des instructions logicielles qui, lorsqu'elles sont exécutées par un ordinateur, mettent en oeuvre un tel procédé de surveillance.

L'invention a également pour objet un dispositif électronique de surveillance de l'exécution d'une première chaine de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant :
- un module d'acquisition configuré pour acquérir et calculer une pluralité de paramètres d'entrée/sortie de ladite première chaine de calcul graphique,
- un module de calcul configuré pour déterminer, pour chaque paramètre de ladite pluralité, au moins une liste de commandes graphiques propre à générer une symbologie associée à représenter,
- un module graphique configuré pour générer une image comprenant la symbologie associée à chaque paramètre, à partir de ladite au moins une liste de commandes graphiques respectivement associée à chaque paramètre de ladite pluralité,
- un module d'affichage configuré pour afficher ladite image comprenant la symbologie associée à chaque paramètre, sur l'écran de visualisation associé à ladite chaine de calcul graphique et d'affichage,
le dispositif électronique de surveillance étant associé localement à ladite première chaine de calcul graphique et d'affichage, et, pour au moins un paramètre de ladite pluralité, configuré pour :
+ dupliquer et insérer ladite au moins une liste de commandes graphiques associée audit paramètre au sein dudit module de calcul,
+ à partir d'une valeur courante et dynamique dudit paramètre, obtenir un code de redondance cyclique courant associé à un micro-motif courant généré par exécution de ladite au moins une liste de commandes graphiques dupliquée associée audit paramètre,
+ comparer ledit code de redondance cyclique courant associé au micro-motif courant, à un code de redondance cyclique de référence associé à un micro-motif de référence obtenu et stocké au préalable dans un espace mémoire dédié au sein dudit dispositif électronique de surveillance pour une valeur sensiblement identique dudit paramètre à un seuil de tolérance près propre audit paramètre,
+ en cas d'écart de code de redondance cyclique, entre ledit code de redondance cyclique courant associé à un micro-motif courant et ledit code de redondance cyclique de référence associé à un micro-motif de référence, sanctionner automatiquement ladite première chaine de calcul graphique et d'affichage par mise en oeuvre d'au moins une suspension de son exécution.

L'invention a également pour objet un équipement avionique d'aéronef comprenant :
- une première chaine de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant :
- un module d'acquisition configuré pour acquérir et calculer une pluralité de paramètres d'entrée/sortie de ladite première chaine de calcul graphique,
- un module de calcul configuré pour déterminer, pour chaque paramètre de ladite pluralité, au moins une liste de commandes graphiques propre à générer une symbologie associée à représenter,
- un module graphique configuré pour générer une image comprenant la symbologie associée à chaque paramètre, à partir de ladite au moins une liste de commandes graphiques respectivement associée à chaque paramètre de ladite pluralité,
- un module d'affichage configuré pour afficher ladite image comprenant la symbologie associée à chaque paramètre, sur l'écran de visualisation associé à ladite chaine de calcul graphique et d'affichage, et
- un dispositif de surveillance de l'exécution de ladite première chaine de calcul graphique et d'affichage selon la présente invention, tel que précité.

L'invention a également pour objet un aéronef comprenant un dispositif électronique de surveillance selon la présente invention, tel que précité, ou comprenant un équipement avionique selon la présente invention, tel que précité.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'une architecture système d'un équipement avionique selon la présente invention ;
- la figure 2 est une représentation schématique d'une variante d'architecture système selon la présente invention ;
- la figure 3 est une représentation schématique d'un exemple d'application de la présente invention ;
- la figure 4 est une représentation schématique d'un module d'alimentation à découpage d'un équipement avionique selon la présente invention ; et
- la figure 5 est un organigramme d'un procédé de surveillance de l'exécution d'une première chaine de calcul graphique et d'affichage selon la présente invention.

Dans la présente description, sauf autre précision, les expressions « sensiblement », « environ », « approximativement » et « de l'ordre de » définissent une relation d'égalité à plus ou moins 10%, de préférence à plus ou moins 5%.

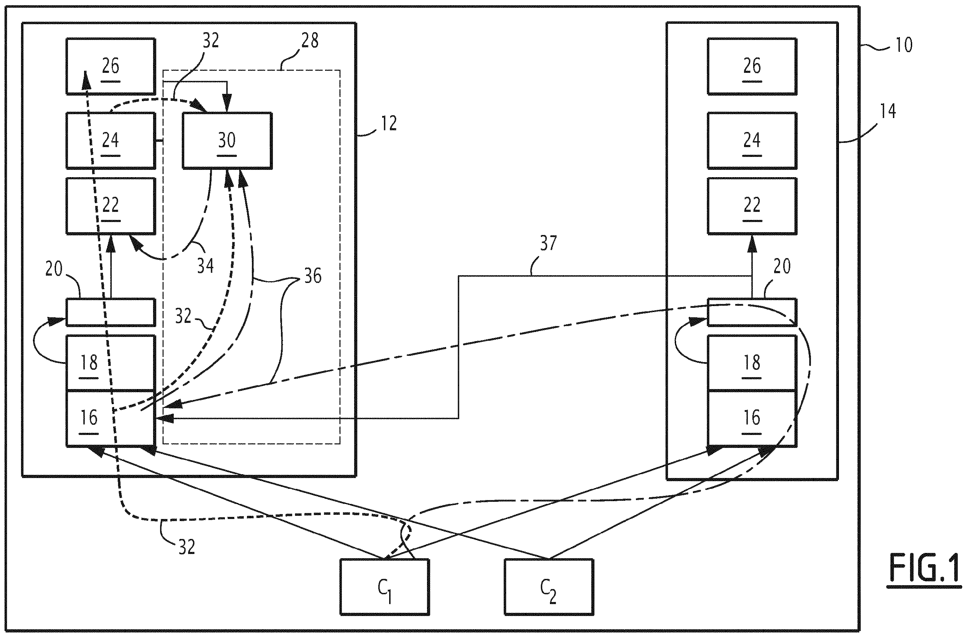

Sur l'exemple de la figure 1, un ensemble avionique 10 d'un cockpit d'aéronef est représenté. Cet ensemble avionique 10 comprend notamment au moins deux écrans. Chaque écran est associé à une chaine de calcul graphique et d'affichage. Sur la figure 1, chaque chaine de calcul graphique et d'affichage est représentée au sein d'un équipement avionique d'affichage 12 et 14.

Chaque chaine de calcul graphique et d'affichage comprend classiquement tout d'abord un module d'acquisition 16 configuré pour acquérir une pluralité de paramètres d'entrée/sortie de ladite première chaine de calcul graphique, ces paramètres étant fournis par une pluralité de capteurs avioniques tels que les capteurs C1 et C2 par exemple propres à fournir respectivement un paramètre P1 pour le capteur C1 et un paramètre P2 pour le capteur C2.

De plus, classiquement, chaque chaine de calcul graphique et d'affichage comprend, en sortie du module d'acquisition 16, un module de traitement 18 configuré pour déterminer des données d'entrée/sortie à partir des paramètres acquis, et en sortie du module de traitement 18, un module de validation 20 des données d'entrées/sortie déterminées par le module de traitement 18, de sorte qu'en sortie du module de validation 20 les données d'entrées/sortie présentent un niveau de criticité conforme au niveau de criticité DAL A (de l'anglais *Development Assurance Level*) représentatif du fait qu'un défaut de l'ensemble formé des modules 16, 18 et 20 pourrait provoquer un problème de mauvaise interprétation des données par l'équipage compromettant la sécurité de vol et conduisant à un effet hasardeux voire catastrophique s'il était simultané sur au moins deux postes de pilotage (i.e. pilote et co-pilote).

Par ailleurs, en sortie du module de validation 20, chaque chaine de calcul graphique et d'affichage comprend également classiquement un module de calcul 22 configuré pour déterminer, pour chaque paramètre de ladite pluralité, au moins une liste de commandes graphiques propre à générer une symbologie associée à représenter, puis un module graphique 24 configuré pour générer une image (i.e. réaliser le tracé de l'image) comprenant la symbologie associée à chaque paramètre, à partir de ladite au moins une liste de commandes graphiques respectivement associée à chaque paramètre de ladite pluralité, et enfin un module d'affichage 26 (i.e. un écran et sons système d'éclairage associé, par exemple un écran à cristaux liquides LCD (de l'anglais *Liquid CrystalDisplay*) configuré pour afficher ladite image comprenant la symbologie associée à chaque paramètre, sur l'écran de visualisation associé à ladite chaine de calcul graphique et d'affichage.

En particulier, l'image affichée par le module d'affichage 26 présente niveau de criticité au moins DAL B (de l'anglais *Development Assurance Level*) représentatif du fait qu'un défaut de l'ensemble formé des modules 22, 24 et 26 pourrait provoquer un problème d'interprétation erronée d'un des pilotes conduisant à un effet HAZ (de l'anglais *Hazardous*) pouvant entrainer des dégâts sérieux de l'aéronef.

Il est à noter que sur l'exemple de la figure 1, les équipements avioniques d'affichage 12 et 14 représentés sont à la fois propres à mettre en oeuvre la génération graphique obtenue via le module de calcul 22 et le module graphique 24 et l'affichage via le module d'affichage 26 (i.e. un écran). Autrement dit, la génération graphique et l'affichage sont unies au sein d'un même équipement présentant alors une architecture système dite communément SMART.

A titre d'alternative à laquelle la présente invention est également applicable, selon une architecture système dite communément DUMB, la génération graphique et l'affichage sont séparés et dans des entités distinctes et indépendantes, à savoir des calculateurs graphiques d'une part (formés des modules 16, 18, 20, 22, 24 précités) et des écrans de module d'affichage 26 séparés d'autre part, les calculateurs graphiques indépendants transmettant les images par voies vidéo aux écrans.

Selon la présente invention, l'équipement avionique d'affichage 12 est par ailleurs enrichi localement d'une unité 28 distincte de la chaine de calcul graphique et d'affichage formée des modules précités 16, 18, 20, 22, 24, 26.

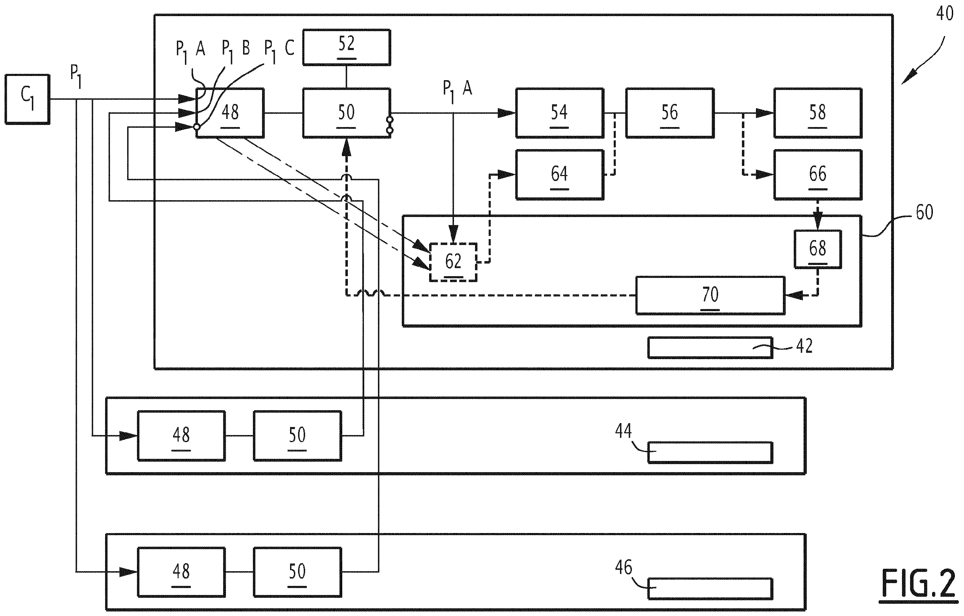

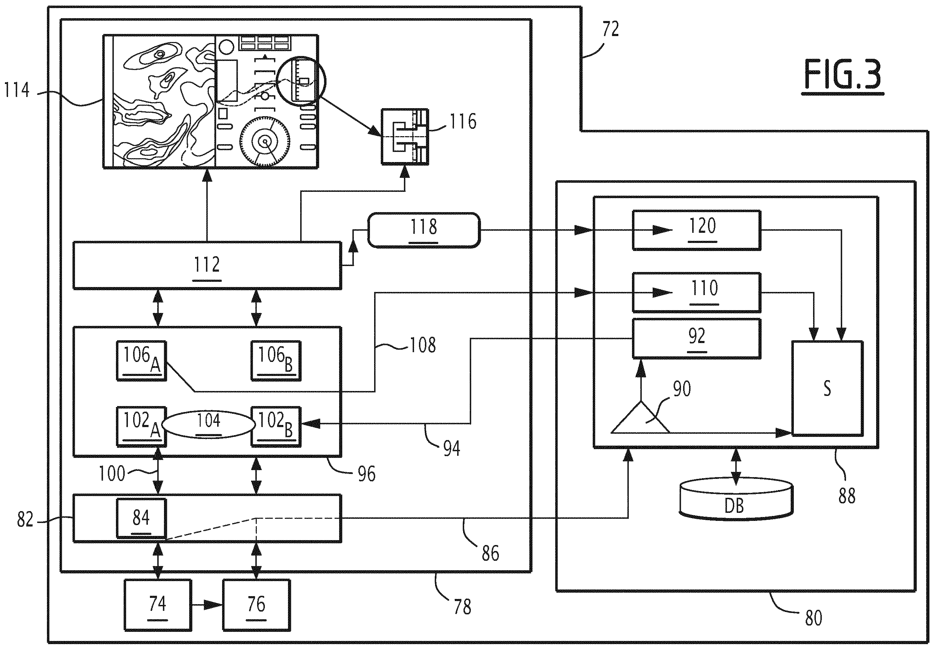

Une telle unité 28, indépendante matériellement de la chaine de calcul graphique et d'affichage formée des modules précités 16, 18, 20, 22, 24, 26, tout en étant intégrée au sein de l'équipement avionique d'affichage 12, comprend notamment un dispositif électronique de surveillance 30 détaillé par la suite en relation avec les figures 2 et 3.

En particulier, un tel dispositif 30 comprend un microprocesseur non représenté sur la figure 1, une mémoire non représentée sur la figure 1, et des interfaces non représentées sur la figure 1, pour récupérer les paramètres critiques 32, des données 32 traitées au fur et à mesure par la chaine de calcul graphique et d'affichage formée des modules précités 16, 18, 20, 22, 24, 26, et en particulier des données 32 de sortie de la génération graphique mise en oeuvre par le module graphique 24 et effectuer un calcul de surveillance comme détaillé par la suite en relation avec les figures 2, 3 et 5.

En particulier et tel que décrit par la suite en relation avec les figures 2 et 3, un tel dispositif 30 est propre à générer au moins une sanction 34 en en cas de détection d'erreur et stopper la chaine de calcul graphique primaire, ce qui ne nécessite aucune intervention des pilotes et se traduit par la perte momentanée ou permanente du la chaine de calcul graphique primaire pour une seule voie d'affichage à savoir celle de l'équipement avionique d'affichage 12.

Plus précisément, lorsqu'une erreur est détectée localement par le dispositif de surveillance 30, le dispositif 30 de surveillance est configuré pour ordonner, selon la flèche 34 de la figure 1 représentative de la sanction générée, au module de calcul 22, de redémarrer après avoir réinitialisé sa mémoire (panne pouvant être liée à une perturbation par une particule isolée PPI (SEU en anglais pour *Single event upset*)*.* La perte est dans ce cas avantageusement momentanée (environ 2s).

Si, après un tel redémarrage, l'erreur est toujours présente, notamment suivant l'impact sur la sécurité du vol, le dispositif 30 de surveillance est alors configuré pour mettre à l'arrêt totalement l'équipement avionique d'affichage 12 jusqu'au prochain arrêt/marche de l'alimentation non représenté, ce qui revient à un arrêt forcé, initié par le dispositif électronique de surveillance 30, et ce jusqu'à redémarrage par une intervention humaine.

Par ailleurs, le dispositif 30 de surveillance, lorsqu'il identifie une panne au sein de la chaine de calcul graphique et d'affichage formée des modules précités 16, 18, 20, 22, 24, 26 de l'équipement avionique d'affichage 12, est configuré pour initier une reconfiguration d'affichage au sein du cockpit d'aéronef pour que les informations configurées initialement pour être affichées par la chaine de calcul graphique défectueuse de l'équipement avionique d'affichage 12 soit affichées par un autre équipement avionique d'affichage tel que l'équipement avionique 14. Une telle reconfiguration est identique à celle mis en oeuvre classiquement en cas de panne d'écran.

Par ailleurs, le dispositif 30 de surveillance est propre à mémoriser dans une mémoire non volatile locale non représentée l'évènement ayant conduit à une sanction du module ou de l'outil défectueux de sorte à en faciliter la maintenance correspondant alors à une simple dépose et remplacement du module, outil voire équipement matériel défectueux.

Selon un aspect non représenté, le dispositif 30 de surveillance utilise une électronique simple comme détaillé par la suite en relation avec les figure 2 et 3 exécutée le cas échéant au moyen d'un microprocesseur non représenté de faible capacité et, pour apporter plus d'indépendance, pouvant être dissimilaire de celui de la chaine de calcul graphique et d'affichage formée des modules précités 16, 18, 20, 22, 24, 26 de l'équipement avionique d'affichage 12.

Selon la présente invention, tel qu'illustré par la figure 1, pour éviter un mode commun sur les entrées/sorties (IO de l'anglais *Input Output*) ainsi qu'une redondance locale de calcul de ces entrées/sorties qui impliquerait de la complexité et un coût important sur chaque équipement avionique d'affichage, notamment en termes de redondance électronique, de protections contre la foudre ou contre les interférences électromagnétiques EMI (de l'anglais *electromagnetic interférence*)*,* de connecteurs, etc., les entrées/sorties acquises et validées par d'autres équipements avioniques, tel que l'équipement avionique d'affichage 14 sur la figure 1, sont propres à être retransmises selon la flèche 36, via le module d'acquisition 16 vers le dispositif électronique de surveillance 30 de l'équipement avionique d'affichage 12.

Selon un aspect non représenté, pour une architecture système dite communément SMART, chaque écran est propre à retransmettre les entrées/sorties acquises et validées au sein de la chaine de calcul graphique et d'affichage qui lui est associée, tandis pour une architecture système dite communément DUMB ce sont les calculateurs graphiques (formés des modules 16, 18, 20, 22, 24 précités) qui sont propres à mettre en oeuvre une telle retransmission entrées/sorties acquises et validées pour consolider les entrées/sorties acquises d'un équipement distinct.

Selon un aspect particulier de la présente invention, afin d'éviter tout mode commun de panne lié au transfert par le réseau et à la ressource d'acquisition 16 qui est commune avec la chaine de calcul graphique et d'affichage directe de l'équipement avionique d'affichage 12, les paramètres critiques sont encapsulés par l'autre équipement avionique 14 avec un contrôle de redondance cyclique CRC. Les données d'entrées/sorties critiques ainsi encapsulées sont transmises selon la flèche 37 par exemple par le calculateur graphique (formés des modules 16, 18, 20, 22, 24 précités) de l'équipement avionique d'affichage 14 vers le dispositif électronique de surveillance 30 de l'équipement avionique d'affichage 12 en passant par son module d'acquisition 16.

La figure 2 est une représentation schématique d'une variante d'architecture système selon la présente invention. Plus précisément, la figure 2 illustre la structure interne d'une première chaine de calcul graphique et d'affichage 40 intégrée au sein d'un équipement avionique d'affichage 42 selon la présente invention.

Sur la figure 2, deux autres chaines de calcul graphique et d'affichage sont également partiellement représentées et sont intégrées respectivement au sein d'un équipement avionique d'affichage 44 et d'un équipement avionique d'affichage 46 chacun distinct de l'équipement avionique d'affichage 42 selon la présente invention.

Chacune des trois chaines de calcul graphique et d'affichage comprend un module d'acquisition 48 configuré pour acquérir une pluralité de paramètres d'entrée/sortie et en sortie, un module de traitement 50 configuré pour déterminer des données d'entrée/sortie à partir des paramètres acquis.

Comme illustré par la figure 2, la première chaine de calcul graphique et d'affichage 40 comprend en outre un espace mémoire 52 connecté au module de traitement 50, et en sortie de ce module de traitement 50 classiquement un premier outil de calcul 54 au sein du module de calcul 22 de la figure 1 non représenté sur la figure 2, ce premier outil de calcul 54 étant configuré pour déterminer, pour chaque paramètre de ladite pluralité, au moins une liste de commandes graphiques propre à générer une symbologie associée à représenter, puis un module graphique 56 configuré pour générer une image comprenant la symbologie associée à chaque paramètre, à partir de ladite au moins une liste de commandes graphiques respectivement associée à chaque paramètre de ladite pluralité, et enfin un module d'affichage comprenant un écran dont la zone utile 58 est configurée pour afficher ladite image comprenant la symbologie associée.

De plus, comme indiqué précédemment en relation avec la figure 1, selon la présente invention, la première chaine de calcul graphique et d'affichage 40 comprend en outre un dispositif électronique de surveillance 60.

Selon un aspect particulier de l'invention, le dispositif électronique de surveillance 60 comprend un voteur 62 activable notamment lorsqu'au moins deux autres chaines de calcul graphique et d'affichage distinctes de la première chaine de calcul graphique et d'affichage 40, transmettent par encapsulation des valeurs d'un même paramètre reçu également directement par la première chaine de calcul graphique et d'affichage 40.

En effet, comme illustré par la figure 2, un même paramètre P₁ d'entrée/sortie est transmis, par exemple par un capteur non représenté, directement au module d'acquisition 48 de la première chaine de calcul graphique et d'affichage 40 sous la forme P₁A, de même qu'en entrée des deux autres chaines de calcul graphique et d'affichage intégrées respectivement au sein des équipements avioniques d'affichage 44 et 46.

Selon la présente invention, le module de traitement 50 de chacune des deux autres chaines de calcul graphique et d'affichage intégrées respectivement au sein des équipements avioniques d'affichage 44 et 46 est configuré pour encapsuler au sein d'un CRC, une valeur P₁B pour la chaine de calcul graphique et d'affichage intégrée au sein de l'équipement avionique d'affichage 44, et respectivement une valeur P₁C pour la chaine de calcul graphique et d'affichage intégrée au sein de l'équipement avionique d'affichage 46, et transmettre le CRC correspondant au module d'acquisition 48 de la première chaine de calcul graphique et d'affichage 40, qui retransmet ces trois valeurs P₁A, P₁B et P₁C au voteur 62.

Un tel voteur 62 du dispositif électronique de surveillance 60 est alors propre à vérifier par vote, la valeur courante et dynamique du paramètre P₁A reçu directement.

Le voteur permet de savoir si l'acquisition directe du paramètre est P₁A correct et si la valeur est équivalente à d'autres sources indépendantes par comparaison deux à deux, soit P₁A avec P₁B, P₁A avec P₁C, P₁B avec P₁C, et comparaison de l'écart obtenu à chaque comparaison deux à deux à un même seuil de tolérance.

On détermine ainsi le paramètre parmi P₁A, P₁B et P₁C qui est incorrect et différent des deux autres au seuil de tolérance acceptable, ce qui permet de localiser précisément une éventuelle panne.

Autrement dit, la chaine d'acquisition locale 40 de l'équipement avionique d'affichage 42 reçoit d'un capteur, non représenté sur la figure 2, le paramètre P₁A à un premier instant ta, puis de manière externe et encapsulé au sein d'un CRC, le même paramètre P₁, issu du même capteur, sous la forme P₁B à l'instant t₁ transmis par le module de traitement 50 de la chaine d'acquisition intégrée au sein de l'équipement avionique d'affichage 44, et le même paramètre P₁, issu du même capteur, sous la forme P₁C à l'instant t₂ transmis par le module de traitement 50 de la chaine d'acquisition intégrée au sein de l'équipement avionique d'affichage 46. Il est à noter que selon la présente invention, les instants t₀, t₁, t₂ sont contraints en latence faible (i.e. inférieure à un seuil de latence prédéterminé) ce qui permet de réduire la contrainte d'échanges sur le réseau, ou, à titre d'alternative, les paramètres P₁A, P₁B et P₁C sont datés ce qui permet ensuite de les identifier.

Si l'écart entre P₁A et P₁B, ou si l'écart entre P₁A et P₁C, est supérieur au seuil de tolérance prédéterminé alors que l'écart entre les valeurs externes P₁B et P₁C reste inférieur à ce même seuil de tolérance alors le voteur 62 détecte et localise qu'il y a une source de panne au sein des modules d'acquisition 48 et de traitement 50 de la chaine d'acquisition locale 40 de l'équipement avionique d'affichage 42, et en conséquence le dispositif électronique de surveillance 60 émet une sanction.

Autrement dit, la comparaison deux à deux mise en oeuvre par le voteur 62 conduit à disposer d'une valeur de vote valide en sortie de celui-ci permettant d'identifier le paramètre, parmi les paramètres P₁A, P₁B et P₁C, qui n'est pas dans la tolérance (à noter ici qu'on ne considère pas le cas de double panne).

Si le voteur 62 sort une valeur cohérente de la chaine directe de calcul graphique et d'affichage 40 intégrée au sein d'un équipement avionique d'affichage 42 alors le dispositif électronique de surveillance 60 est configuré pour activer un deuxième outil de calcul 64 au sein du module de calcul 22 de la figure 1 non représenté sur la figure 2, ce deuxième outil de calcul 64 étant propre à dupliquer la liste de commandes graphiques associée au paramètre P₁ déterminée par le premier outil de calcul 54 et l'insérer au sein de ce deuxième outil de calcul 64 du module de calcul 22.

Dans le cas contraire (i.e. sortie incohérente du voteur 62) une sanction est générée pour, comme indiqué précédemment, redémarrer et/ou stopper la chaine de calcul graphique et d'affichage 40 intégrée au sein d'un équipement avionique d'affichage 42, ce qui ne nécessite aucune intervention des pilotes et se traduit par la perte momentanée ou permanente de la chaine de calcul graphique primaire 40 pour une seule voie d'affichage à savoir celle de l'équipement avionique d'affichage 42.

Ainsi, dans le cas où il est possible de disposer de trois chaines d'acquisition distinctes au niveau du système, à savoir celles des équipements avioniques d'affichage 42, 44 et 46, un principe de voteur est proposé selon la présente invention ce qui a l'avantage d'identifier la source invalide et de disposer en permanence d'une valeur valide du paramètre (en considérant toujours qu'il ne peut y avoir qu'une seule panne simultanée). La disponibilité est dans ce cas améliorée.

Selon la présente invention, c'est le dispositif électronique de surveillance 60 qui assure que le jeu de paramètres critiques reçus des unités de calcul indépendantes (i.e. de chaque chaine de calcul graphique et d'affichage des équipements 42, 44 et 46 respectivement) sont intègres du fait de la comparaison du CRC d'encapsulation et du résultat du vote avec au moins trois sources disponibles dont une locale (i.e. ici celle de la chaine de calcul graphique et d'affichage 40 intégrée au sein d'un équipement avionique d'affichage 42) et deux autres issues des calculateurs externes (les chaines de calcul graphique et d'affichage intégrées au sein des équipements avionique d'affichage 44 et 46).

Lorsqu'il est impossible de disposer de trois chaines distinctes de calcul graphique et d'affichage, il ne sera pas possible de localiser la panne et dans ce cas, selon la présente invention, une différence notable (i.e. un écart de valeurs supérieur à un seuil prédéterminé) entre les paramètres d'entrée sortie acquis en local d'une part et ceux reçus d'au moins une chaine indépendante externe permet de lever une erreur se traduisant par une indication claire du risque d'erroné sur ces paramètres (éviter un erroné non détecté) ou par une inhibition du paramètre considéré en cas d'écart entre les deux sources distinctes.

Comme détaillé par la suite en relation avec la figure 3, selon un aspect particulier, le dispositif électronique de surveillance 60, et le cas échéant via le voteur 62, qui en présence d'une valeur de P₁A vérifiée a activé le deuxième outil de calcul 64, est optionnellement propre à modifier la valeur de P₁A pour générer une valeur de référence approchée connue la plus proche de P₁A appartenant à une base de donnée dudit paramètre avec un seuil compatible des objectifs de sécurité du vol, et à transmettre cette valeur pour générer un micro-motif (ou une micro-image) associé par exécution, par le module graphique 56, de la liste de commandes graphiques associée au paramètre P₁.

En effet, de manière classique chaque paramètre dispose d'une image représentative (i.e. une symbologie) à l'attention du pilote. A partir d'une telle image représentative (i.e. une symbologie) la présente invention propose via le deuxième outil de calcul 64 puis le module graphique 56 de générer un micro-motif (en anglais *pattern*) correspondant à une image de référence représentative simplifiée d'un paramètre critique. Ce micro-motif est selon la présente invention réintroduit dans la chaine de calcul graphique et d'affichage 40 afin de s'assurer qu'elle est propre à traiter correctement chaque paramètre d'entrée/sortie jusqu'à sa représentation dans la mémoire écran (ensemble de pixels).

Selon la présente invention, il est considéré que la génération par le premier outil de calcul 54 et par le second outil de calcul 64, et respectivement l'exécution graphique par le module graphique 56 de la liste de commandes graphiques propre à chacun de ces outils de calcul 54 et 64 est déterministe et conduit au même résultat même si exécutées quelques millisecondes l'une après l'autre.

En particulier la liste de commandes graphiques générée par l'outil de calcul 64 et exécutée par le module graphique 56 est propre à produire un micro-motif associé dans une zone écran 66 non visible par le pilote mais faisant partie de la ressource d'affichage.

Si les micro-motifs sont correctement tracés jusqu'à la mémoire image du module graphique 56 alors l'image opérationnelle propre à être affichée dans la zone utile 58 de l'écran de la chaine de calcul graphique et d'affichage 40 ne peut pas comporter une image à la fois cohérente et ambiguë pouvant induire en erreur un pilote (de l'anglais *missleading*) correspondant à l'affichage d'un ou plusieurs paramètres cohérents décalés d'une valeur plausible et non détectable de manière immédiate par les pilotes (dérive du paramètre, écart modéré ...) ou encore à une image qui resterait figée plusieurs centaines de millisecondes mais qui ne montrerait aucune détérioration.

Il est à noter, que ne peuvent induire en erreur une erreur fugitive à peine perceptible (quelques centaines de millisecondes) n'ayant pas de conséquence sur la tâche pilote, ou encore une erreur propagée à plusieurs endroits de la symbologie rendant l'image incohérente et détectable par le pilote (saut d'altitude, de vitesse, d'attitude ...), une image qui s'efface de manière visible (perte du contrôle de l'écran), une image saccadée qui alterne plusieurs valeurs de paramètres, un décalage de la symbologie visible, voire avec une partie tronquée.

Selon un aspect optionnel particulier, pour s'assurer du déterminisme de la génération graphique mise en oeuvre par le module graphique 56, la présente invention propose d'activer les micro-motifs différemment d'un cycle de tracé à l'autre mise en oeuvre par le module graphique 56 (i.e. d'activer les micro-motifs à des instants distincts d'un cycle de génération graphique à un autre).

Comme indiqué précédemment, les micro-motifs sont tracés par le module graphique 56 dans une zone écran 66 non visible par le pilote mais faisant partie de la ressource d'affichage et transmis à un module 68 du dispositif électronique de surveillance 60. Le module 68 est configuré pour générer, pour chaque micro-motif courant affiché dans la zone écran 66 non visible, un code de redondance cyclique CRC associé et le transmettre au module de comparaison 70 (i.e. un comparateur électronique matériel (de l'anglais *hardware*) configuré, pour la valeur du paramètre associé au micro-motif courant, pour comparer ce CRC associé au micro-motif courant à un CRC de micro-motif de référence (i.e. attendu) et stocké au préalable dans un espace mémoire dédié du dispositif électronique de surveillance 60 et/ou dans une base donnée externe et accessible par le dispositif électronique de surveillance 60, l'espace mémoire dédié et/ou la base de donnée externe étant non représenté(s).

Le résultat de comparaison produit par le module de comparaison 70 est binaire, soit les CRC de micro-motif courant et de référence sont identiques soit ils sont différents, et en cas d'écart, le dispositif électronique de surveillance 60 est alors configuré pour sanctionner automatiquement ladite première chaine de calcul graphique et d'affichage 40 par mise en oeuvre d'au moins une suspension de son exécution pour le paramètre associé au CRC de micro-motif courant distinct du CRC micro-motif de référence voire l'arrêt total suivant l'impact de ce paramètre sur la sécurité du vol, tel qu'illustré en pointillés par la flèche de sanction allant du module de comparaison 70 du dispositif électronique de surveillance 60 au module de traitement 50.

Un tel module de comparaison 70 localisé dans le dispositif électronique de surveillance 60 est donc configuré pour mettre en oeuvre une comparaison indépendante par rapport à la chaine de calcul graphique et d'affichage 40 formée classiquement uniquement des modules 48, 50, 54, 56 et 58 précités.

Comme chaque paramètre peut prendre une infinité de valeurs, le paramètre du micro-motif est selon la présente invention ramené à une valeur connue proche et conforme à une tolérance acceptable prédéterminée pour la tâche pilote associée au paramètre en question.

Au préalable, et notamment au sol sans contrainte de navigabilité, pour construire la base de donnée ou pour alimenter l'espace mémoire dédié, le CRC de chaque micro-motif de référence (i.e. attendu), également appelé signature de micro-motif, est déterminé en suivant les seuils prédéterminés de tolérance acceptable tel que décrit par la suite en relation avec la figure 3.

La figure 3 est une représentation schématique d'un exemple d'application de la présente invention, à savoir l'affichage de l'altitude.

Sur cette figure, un système avionique 72 de cockpit d'aéronef est représenté, et comprend notamment une pluralité 74 de capteurs de paramètres critiques, et plusieurs chaines distinctes de calcul graphique et d'affichage à savoir au moins la chaine de calcul graphique et d'affichage 76 et la chaine de calcul graphique et d'affichage 78 dont le fonctionnement est contrôlé (i.e. surveillé) par une unité de surveillance 80.

Dans cet exemple d'application, un des capteurs de pluralité 74 de capteurs fournit directement au module d'acquisition 82 de la chaine de calcul graphique et d'affichage 78 une altitude de 1043 pieds à un instant t₀. Selon un aspect optionnel, le module d'acquisition 82 via un outil de filtrage transforme cette valeur qui passe, par exemple de 1043 pieds à 1040 pieds.

L'autre chaine de calcul graphique et d'affichage 76 fournit à un instant t₁ une altitude de 1056 pieds, cette valeur d'altitude étant encapsulée par CRC.

Selon la présente invention, les deux valeurs de 1040 pieds (fournie directement) et 1056 pieds (fournie indirectement par la chaine de calcul graphique et d'affichage 76) sont transmises par le module d'acquisition 82, via la flèche 86 au dispositif de surveillance 88 selon la présente invention et en particulier à un premier comparateur 90 qui compare l'écart de 16 pieds entre ces deux valeurs à un premier seuil prédéterminé de valeur dudit paramètre.

Selon l'exemple de la figure 3, un tel écart de 16 pieds reste acceptable mais dans le cas contraire, le dispositif de surveillance 88 est configuré pour générer automatiquement une sanction S de la première chaine de calcul graphique et d'affichage 78 par mise en oeuvre d'au moins une suspension de son exécution.

Comme l'écart de 16 pieds reste acceptable, le premier comparateur 90 active optionnellement un module 92 de détermination d'une valeur de référence approchée configuré pour ramener la valeur courante et dynamique de chaque paramètre à ladite valeur de référence approchée en fonction dudit seuil de tolérance propre à l'altitude et fournit alors selon la flèche 94 une valeur de 1050 pieds à un module de calcul 96 (ladite valeur de référence approchée étant connue et stockée dans la base de donnée).

En parallèle, le module d'acquisition 82 fournit selon une flèche 100 directement et classiquement la valeur d'altitude courante de 1040 pieds après filtrage qu'il a obtenue à partir de la valeur fournie directement par le capteur d'altitude de la pluralité 74 de capteurs de paramètres critique.

Le module de calcul 96 comprend deux outils 102_{A} et 102_{B} d'exécution d'un calcul 104 (i.e. un code de calcul) associé au paramètre d'altitude et dupliqué entre ces deux outils de calculs 102_{A} et 102_{B}.

Autrement dit, les deux outils 102_{A} et 102_{B} sont configurés pour appliquer sensiblement la même liste de commandes graphiques associée au même paramètre d'altitude, à la différence près que l'outil 102a, correspond à l'outil de calcul classique de la chaine de calcul graphique et d'affichage 78 et est propre à générer complètement l'image à afficher au pilote dans une zone d'affichage utile selon un cycle de calcul à 20Hz, tandis que l'outil 102_{B} correspond à un outil de calcul activé par le dispositif de surveillance 88 pour générer uniquement le micro-motif d'altitude selon un cycle de calcul à 1Hz par exemple.

L'outil 102_{A} reçoit donc en entrée la valeur d'altitude 1040 pieds tandis que l'outil 102_{B} reçoit en entrée la valeur d'altitude 1050 pieds.

Au sein du module de calcul 96, les sorties des outils de calculs 102_{A} et 102_{B} sont respectivement connectés à des outils 106_{A} et 106_{B} de génération de pile graphique.

En particulier, tel qu'illustré par la figure 3, l'outil 106_{A} de génération de pile graphique du module de calcul 96 est propre à transmettre, selon la flèche 108, à un deuxième comparateur 110 du dispositif de surveillance 88, la valeur dudit paramètre déterminée pour affichage (i.e. propre à être transmise pour affichage au module graphique 112).

Le deuxième comparateur 110 est propre à comparer cette valeur avant affichage à celle reçue directement par le module d'acquisition 82 de la chaine de calcul graphique 78, et en cas d'écart supérieur à un deuxième seuil prédéterminé de valeur dudit paramètre d'altitude, à sanctionner automatiquement, par génération d'une sanction S, la chaine de calcul graphique et d'affichage 78 par mise en oeuvre d'au moins une suspension de son exécution.

Autrement dit, une fois les calculs effectués par le module de calcul 96 et avant de constituer la vue graphique via le module graphique 112, la valeur du paramètre doit être retournée au dispositif de surveillance 88 pour s'assurer que l'écart entre la valeur transmise au micro-motif (i.e. 1050 pieds) et celle de l'affichage (i.e. 1040 pieds) sont cohérentes et dans la tolérance acceptable pour ce type de paramètre. Un algorithme d'extraction du paramètre sur la base de la pile graphique est donc selon la présente invention propre à être mis en place.

En cas d'écart supérieur au deuxième seuil prédéterminé de valeur dudit paramètre d'altitude, on considère que le mécanisme de surveillance mis en oeuvre par le dispositif de surveillance 88, manipule des données non similaires et que le résultat transmis au dispositif de surveillance 88 ne peut pas compenser de manière cohérente la chaine d'affichage primaire formée des éléments 82, 102_{A}, 106_{A}, 112 et générant l'image globale 114, et la chaine de calcul graphique de génération du micro-motif formée des éléments 82, 102_{B}, 106_{B}, 112 et générant le micro-motif 116 propre à être affiché dans une zone non visible de l'écran mais appartenant à la ressource d'affichage.

Le module graphique 112 est également selon la présente invention configuré pour transmettre le micro-motif 116 à module d'obtention 118 configuré pour obtenir un code de redondance cyclique CRC associé au micro-motif et transmettre ce CRC de micro-motif courant à un troisième comparateur 120 du dispositif de surveillance 88 propre à comparer ce CRC de micro-motif courant à un CRC de micro-motif de référence stocké et accessible par le dispositif de surveillance 88 auprès de la base de donnée DB.

Chaque CRC micro-motif de référence est associé dans la base de donnée DB à une valeur d'altitude. Pour l'exemple de la figure 3 où le CRC de micro-motif courant est associé à la valeur d'altitude de 1050 pieds, le CRC de micro-motif de référence associé à cette même valeur de 1050 pieds est extrait de la base de donnée DB.

Autrement dit, pour extraire un CRC de micro-motif de référence on utilise la valeur d'origine de 1040 pieds ramenée à une valeur de référence approchée de 1050 pieds correspondant à une valeur moyenne du seuil de comparaison correspondant à la tolérance acceptable pour garantir la sécurité du vol.

Avec une telle valeur de référence approchée de 1050 pieds (déterminée notamment par le module 92 de détermination d'une valeur de référence approchée tel qu'indiqué précédemment après validation au moyen du premier comparateur 90 précédemment cité propre à consolider la valeur courante et dynamique de paramètre reçue directement par le module d'acquisition 82 de la chaine 78 en utilisant les valeurs encapsulées via CRC transmises par d'autres chaine distinctes et indépendantes de la chaine 78) et donc légèrement différente et dans la marge acceptable d'erreur pour le pilotage, utilisée pour extraire le CRC de micro-motif de référence, on peut donc assurer que si le CRC de micro-motif courant est correct en sortie d'affichage en étant identique au CRC de micro-motif de référence, la chaine complète 78 d'exécution (formée des modules 82, 96 et 112) est intègre.

Selon un autre exemple si l'altitude reçue est 960 pieds, avec un seuil de tolérance fixé à 50 pieds à cette altitude, on extrait le CRC de micro-motif de référence associé à la valeur 950 pieds, valeur de référence approchée la plus proche de 960 pieds par rapport à la valeur suivante associé à un CRC de micro-motif de référence sauvegardé dans la base DB à savoir la valeur de 1000 pieds espacée de la valeur de 950 pieds de la taille du seuil de tolérance à savoir 50 pieds.

Ce principe d'association, à un CRC de micro-motif de référence, de chaque valeur de référence approchée, espacée du seuil de tolérance pertinent au type de paramètre et à la plage de valeurs considérés permet de limiter le nombre de configuration de CRC de micro-motif de référence à sauvegarder au sein de la base DB.

Par exemple et sous condition de validation au niveau de la sécurité du vol , afin de quantifier l'espace mémoire nécessaire pour le stockage des CRC de micro-motif correspondant à chaque paramètre et pour chaque valeur de tolérance, on utilise par exemple pour l'angle de roulis (de l'anglais *roll*) : une plage de -90° à +90°, avec un seuil de tolérance de 2° (i.e. un pas, un espacement entre valeurs angulaires de 2°) ce qui revient à stocker 90 valeurs de CRC de micro-motifs associés à l'affichage du paramètre de l'angle de roulis, pour le cap (de l'anglais *heading*) : on utilise une plage de 360°, avec un seuil de tolérance de 2° ce qui revient à stocker 180 valeurs de CRC de micro-motifs associés à l'affichage du paramètre de cap, etc. pour toutes les valeurs pertinentes de paramètres à représenter au sein d'un cockpit de pilotage, ce qui correspond notamment à un espace mémoire de stockage au sein de la base de données DB de l'ordre de 20ko (kiloOctet), espace mémoire généré notamment au préalable au sol sur banc de test en injectant chaque valeur de plages de paramètres espacée du seuil de tolérance prédéfini dans une chaine de calcul graphique intègre de référence pour en récupérer le CRC de micro-motif de référence associé. La génération d'un tel espace mémoire est automatisable afin de pouvoir gérer des évolutions des micro-motifs en fonction de la représentativité requise pour l'aéronef concerné.

Ainsi, le micro-motif courant 116 suit la même chaine d'exécution graphique 78 que l'image opérationnelle 114 et est représentatif des mêmes calculs pour couvrir la partie calcul et graphique. Le fait d'injecter au micro-motif courant 116 une entrée dynamique représentative des entrée/sortie de la chaine de calcul graphique primaire 78, permet de s'assurer que les données ne sont pas figées et apporte une assurance que la chaine de traitement effectue bien les algorithmes avec différentes valeurs qui dépendent des paramètres de vol (i.e. du contexte en temps réel).

Dans l'exemple de la figure 3, le dispositif électronique de surveillance 88 comprend une unité de traitement d'informations non représentée formée par exemple d'une mémoire et d'un processeur associé à la mémoire tous deux non représentés.

Dans l'exemple de la figure 3, le premier comparateur 90, le module 92 de détermination d'une valeur de référence approchée, le deuxième comparateur 110, et le troisième comparateur 120 et le générateur de sanction S sont réalisés chacun sous forme d'un logiciel, ou d'une brique logicielle, exécutables par le processeur du dispositif électronique de surveillance 88. La mémoire du dispositif électronique de surveillance 88 est alors apte à stocker un logiciel correspondant à chacun de ces éléments 90, 92, 110, 120 et au générateur de sanction. Le processeur du dispositif électronique de surveillance 88 est alors apte à exécuter chacun de ces logiciels.

En variante non représentée, le premier comparateur 90, le module 92 de détermination d'une valeur de référence approchée, le deuxième comparateur 110, et le troisième comparateur 120 et le générateur de sanction S sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie Integrated Circuit).*

Lorsque le dispositif électronique de surveillance 88 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est, une mémoire ROM ou une mémoire RAM, tout type de mémoire non volatile par exemple EPROM, EEPROM, FLASH, NVRAM.... Sur le support lisible est alors mémorisé un programme d'ordinateur comprenant des instructions logicielles.

Selon la présente invention, il est à noter que les calculs mis en oeuvre au sein des outils 102_{A} et 104_{A} associé à la génération de l'image opérationnelle 114 ne sont pas exécutés dans la même partition mémoire que ceux mis en oeuvre au sein de outils 102_{A} et 104_{A} associé à la génération des micro-motifs 116 de chaque paramètre et utilisent donc des zones mémoires différentes d'un même composant ou bloc de composants constituant la mémoire vive RAM (de l'anglais *Random Access Memory*) du module de calcul 96. Un mécanisme de micro-motif de test mémoire est également intégré à une telle partition afin d'en vérifier l'intégrité.

En termes de temps réel, chaque image opérationnelle 114 comprenant un paramètre critique ou plus, le ou les micro-motifs respectivement associés à chaque paramètre sont exécutés les uns après les autres à chaque cycle de la génération graphique permettant une couverture de tous les paramètres dans un temps compatible des objectifs de sécurité (de une à plusieurs secondes suivant la criticité).

De plus, selon la présente invention, du fait que le calcul est effectué en local, la latence est faible de l'ordre d'un cycle d'unité centrale de traitement, ce qui ne nécessite pas de recaler les paramètres par un principe de pile et permet de réduire la contrainte d'échanges sur le réseau. Le seuil de tolérance peut donc être ramené au plus juste, ce qui est beaucoup plus performant que les systèmes de retour d'information de l'état de la technique basés sur plusieurs unités qui s'échangent leurs données de manière asynchrone.

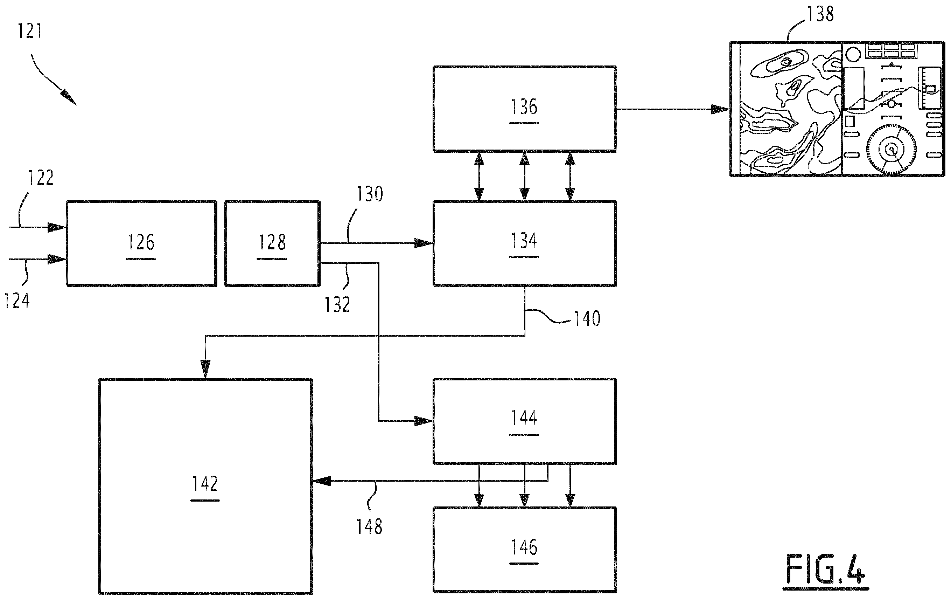

La figure 4 est une représentation schématique d'un module d'alimentation 121 à découpage d'un équipement avionique selon la présente invention. En effet, lorsque la chaine primaire 78 et l'unité de surveillance 80 sont intégrées au sein du même équipement 72, tel qu'illustré précédemment par la figure 3, selon la présente invention, il est en complément également proposé de prendre des précautions au niveau de l'alimentation pour ne pas créer de mode commun de panne.

Une seule alimentation représentée par deux tensions d'alimentation 122 et 124 par exemple de 28 volts en courant continu (Vcc) est suffisante au niveau primaire 126 mais au niveau secondaire 128, il est proposé selon la présente invention de mettre en place une distribution séparée 130 et 132, et préférentiellement de valeur différente.

La tension d'alimentation dédiée 130, par exemple de 12 volts en courant continu (Vcc), alimente, via un convertisseur buck primaire, ou hacheur série 134, la chaine directe primaire 136 générant l'image opérationnelle 138, le buck primaire 134 étant propre à transmettre un retour d'information 140 à un module 142 de surveillance spécifique à l'alimentation propre à détecter toute défaillance du mode commun, à savoir en basse ou haute tension, due à un bruit, à une perturbation, à des micro-coupures, etc., et propre à arrêter l'alimentation en cas de détection de défaillance effective.

La tension d'alimentation dédiée 132, par exemple de 3,3 volts en courant continu (Vcc), alimente via un convertisseur buck secondaire, ou hacheur série 144 indépendant du buck primaire 134, le dispositif de surveillance 146 selon la présente invention présentant notamment un niveau de criticité conforme au niveau de criticité DAL A, le buck secondaire 144 étant également propre à transmettre un retour d'information 148 au module 142 de surveillance spécifique à l'alimentation précité.

Une telle alimentation permet ainsi d'éviter tout fonctionnement des composants électroniques de la chaine primaire 136 ou du dispositif de surveillance 146 en dehors de leur domaine d'usage.

Ainsi, selon la présente invention, un équipement avionique tel que l'équipement avionique 72 de la figure 3 comprend notamment le dispositif électronique de surveillance précédemment cité mais également optionnellement un module d'alimentation à découpage, dont au moins le circuit secondaire est configuré pour fournir une alimentation indépendante ségrégée et/ou configuré pour fournir une tension d'alimentation de valeur distincte entre ladite première chaine de calcul graphique et ledit dispositif de surveillance, et comprenant un élément de surveillance de ladite alimentation ségrégée et/ou tension configuré pour suspendre ladite alimentation en cas d'écart entre une alimentation courante et une alimentation attendue préalablement stockée au sein dudit élément de surveillance dudit module d'alimentation.

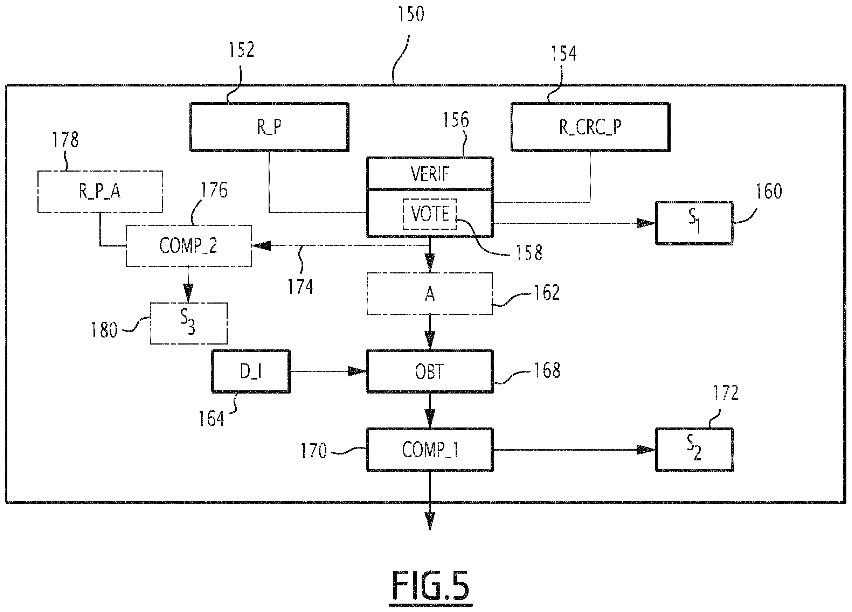

Le fonctionnement du dispositif électronique de surveillance 88 va désormais être expliqué en regard de la figure 5 représentant un organigramme du procédé 150 de l'exécution d'une première chaine de calcul graphique et d'affichage associée à un premier écran de visualisation de cockpit d'aéronef.

Selon une première étape 152, le dispositif électronique de surveillance 88, au sein du premier comparateur 90 met en oeuvre, pour au moins un paramètre d'une pluralité de paramètres d'entrée/sortie de ladite première chaine de calcul graphique, la réception R_P de la valeur courante et dynamique dudit au moins un paramètre d'entrée/sortie, reçue par le module d'acquisition 82 de ladite première chaine de calcul graphique 78, en provenance directe d'un capteur appartenant à une pluralité de capteurs dudit aéronef.

Selon une deuxième étape 154 complémentaire et optionnelle, le dispositif électronique de surveillance 88, au sein du premier comparateur 90 met en oeuvre la réception R_CRC_P d'au moins un code de redondance cyclique encapsulant une valeur dudit paramètre, reçue, puis transmise audit dispositif électronique de surveillance, par ledit module d'acquisition 82 de ladite première chaine de calcul graphique et d'affichage, en provenance d'une chaine 76 de calcul graphique et d'affichage associée à un écran de visualisation dudit cockpit d'aéronef distinct dudit premier écran de visualisation.

Selon une troisième étape 156 complémentaire et optionnelle, le dispositif électronique de surveillance 88, au sein du premier comparateur 90 met en oeuvre la vérification de ladite valeur courante et dynamique dudit paramètre par détermination de l'écart entre:
- la valeur courante et dynamique dudit paramètre, reçue par le module d'acquisition de ladite première chaine de calcul graphique, en provenance directe d'un capteur appartenant à une pluralité de capteurs dudit aéronef, et
- au moins une valeur associée dudit paramètre, déterminée respectivement à partir dudit au moins un code de redondance cyclique encapsulant une valeur dudit paramètre.

En particulier, l'étape de vérification 156 met en oeuvre une étape optionnelle 158 de vote, via le voteur 62 de la figure 2, lorsqu'au moins deux codes de redondance cyclique encapsulant une valeur d'un même paramètre sont reçus sensiblement simultanément en provenance d'au moins deux chaines distinctes de calcul graphique et d'affichage associées respectivement à au moins deux écrans de visualisation distincts dudit cockpit d'aéronef et distincts dudit premier écran de visualisation.

A l'issue de l'étape de vérification 156, en cas d'écart supérieur à un premier seuil prédéterminé de valeur dudit paramètre résultant de ladite détermination d'écart, le cas échéant via le voteur 62 de la figure 2, le dispositif électronique de surveillance (60 de la figure 2 ou encore 88 de la figure 3) met en oeuvre une première étape 160 de sanction S₁ automatique de ladite première chaine de calcul graphique et d'affichage par mise en oeuvre d'au moins une suspension de son exécution.

En l'absence d'un tel écart, le dispositif électronique de surveillance 88 de la figure 3, via le module 92 met en oeuvre optionnellement une étape 162 de détermination d'une valeur de référence approchée de la valeur courante et dynamique dudit au moins un paramètre en fonction dudit seuil de tolérance propre audit au moins un paramètre.

A l'étape 164, le dispositif électronique de surveillance 88 met en oeuvre la duplication et l'insertion d'au moins une liste de commandes graphiques associée audit paramètre au sein du module de calcul 96 de la chaine primaire de calcul graphique et d'affichage.

A l'étape 168, à partir de ladite valeur de référence approchée tel qu'indiqué précédemment, le dispositif électronique de surveillance 88 de la figure 3 met en oeuvre l'obtention, notamment en provenance du module 118 de la figure 3, d'un code de redondance cyclique courant associé à un micro-motif courant généré par exécution de ladite au moins une liste de commandes graphiques dupliquée associée audit paramètre.

Selon l'étape 170, le dispositif électronique de surveillance 88 de la figure 3, met en oeuvre la comparaison dudit code de redondance cyclique courant associé au micro-motif courant, à un code de redondance cyclique de référence associé à un micro-motif de référence obtenu et stocké au préalable dans un espace mémoire DB dédié au sein dudit, ou accessible par ledit, dispositif électronique de surveillance 88 de la figure 3.

Selon l'étape 172, en cas d'écart de valeur de code de redondance cyclique, entre ledit code de redondance cyclique courant associé à un micro-motif courant et ledit code de redondance cyclique de référence associé à un micro-motif de référence, le dispositif électronique de surveillance 88 de la figure 3 met en oeuvre une sanction S₂ automatique de ladite première chaine de calcul graphique et d'affichage 78 de la figure 3 par mise en oeuvre d'au moins une suspension de son exécution.

Optionnellement, le procédé comprend en outre la transmission 174 du résultat de vérification 156 au comparateur optionnel 110 pour une étape 176 de comparaison de ce résultat à la valeur R_P_A dudit paramètre déterminée pour affichage par le module de calcul de ladite première chaine de calcul graphique à partir de la valeur courante et dynamique dudit paramètre, reçue par le module d'acquisition de ladite première chaine de calcul graphique, cette valeur R_P_A dudit paramètre déterminée pour affichage étant au préalable reçue par le comparateur optionnel 110 au cours d'une étape 178.

Lors de l'étape 176, le comparateur optionnel 110 met en oeuvre la comparaison de la valeur R_P_A dudit paramètre déterminée pour affichage et de la valeur courante et dynamique dudit paramètre, reçue par le module d'acquisition de ladite première chaine de calcul graphique, en provenance directe d'un capteur appartenant à une pluralité de capteurs dudit aéronef.

En cas d'écart supérieur à un deuxième seuil prédéterminé de valeur dudit paramètre résultant de la comparaison 176, lors d'une étape 180, le dispositif électronique de surveillance 88 met en oeuvre une sanction automatique S₃ de ladite première chaine de calcul graphique et d'affichage par mise en oeuvre d'au moins une suspension de son exécution.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de mettre en oeuvre une surveillance locale d'une chaine complète de calcul et graphique dans l'équipement avionique d'affichage sur la base de l'exécution partielle de l'application d'affichage pour les paramètres critiques génériques sans nécessiter de deuxième chaine complète de calcul et graphique, ce qui permet de limiter les coûts de surveillance et de développement de la solution tout en rendant possible son intégration au sein de calculateurs graphique associés aux visualisations avionique des futures planches de bord d'aéronef, notamment avec un cockpit sans séparation que ce soit avion ou hélicoptère, mais également dans des aéronefs plus petits (e.g. tels que des taxi volants) qui ne peuvent embarquer des systèmes complexes et redondés.

Par ailleurs, la présente invention permet de limiter les vérifications pilotes sur une détection d'erreur non localisée dans les systèmes cockpit de visualisation et également de réduire les fausses alarmes liées à la latence due aux asynchronismes, aux coupures réseau et micro coupures d'alimentation, aux coupures de communication pouvant rendre le système inopérant, à la nécessité d'inhiber la surveillance en cas d'évolution trop rapide des paramètres ou absence des entrées/sorties coté entité surveillante, à une fausse indication de la chaine primaire de calcul graphique et d'affichage sous surveillance sur ce qu'elle affiche vers le dispositif de surveillance (risque d'inhibition parce que le dispositif de surveillance pourrait croire que c'est un format non critique qui est affiché).

En conséquence, les opérations en cas dégradés sont simplifiées et la charge de travail pilote ainsi que son entrainement sont réduits et facilités.

De plus, la présente invention est modulable et reconfigurable afin de réduire le nombre de paramètres à surveiller au stricte besoin de l'afficheur local et donc libérer de la ressource de calcul, ou au contraire afin d'augmenter le cas échéant le nombre de paramètres critiques dont l'affichage est à surveiller, et d'assurer l'intégrité de l'affichage en limitant la probabilité d'affichage d'un erroné de sorte qu'elle reste inférieure à 10-7 voire 10-9, en localisant et sanctionnant automatiquement la source erronée sans intervention du pilote, et en reconfigurant l'affichage de sorte que tout paramètre critique soit en permanence affiché et visible de l'équipage.

En outre, la maintenance est facilitée et réduite à une simple dépose de l'équipement, module ou encore outil à la source de l'erroné en évitant des déposes non confirmées de panne associées à des bus de communication induisant des dysfonctionnements ou problème de robustesse dont le taux peut atteindre de 10 à 20% des pannes suivant la complexité du système. La présente invention permet ainsi de réduire le taux de dépose de fausses pannes NFF (de l'anglais *No Fault Found*), et le coût de maintenance associé.

## Revendications

1. Procédé (150) de surveillance de l'exécution d'une première chaine (78) de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant au moins :
+ un module (82) d'acquisition configuré pour acquérir et calculer une pluralité de paramètres d'entrée/sortie de ladite première chaine de calcul graphique,
+ un module (96) de calcul configuré pour déterminer, pour chaque paramètre de ladite pluralité, au moins une liste de commandes graphiques propre à générer une symbologie associée à représenter,
+ un module graphique (112) configuré pour générer une image comprenant la symbologie associée à chaque paramètre, à partir de ladite au moins une liste de commandes graphiques respectivement associée à chaque paramètre de ladite pluralité,
+ un module d'affichage configuré pour afficher ladite image (114) comprenant la symbologie associée à chaque paramètre, sur l'écran de visualisation associé à ladite chaine de calcul graphique et d'affichage,
le procédé (150) étant mis en oeuvre par un dispositif électronique de surveillance (88) associé localement à ladite première chaine (78) de calcul graphique et d'affichage, le procédé comprenant les étapes suivantes, pour au moins un paramètre de ladite pluralité :
- duplication et insertion (164) de ladite au moins une liste de commandes graphiques associée audit paramètre au sein dudit module de calcul,
- à partir d'une valeur courante et dynamique dudit paramètre, obtention (168) d'un code de redondance cyclique courant associé à un micro-motif courant généré par exécution de ladite au moins une liste de commandes graphiques dupliquée associée audit paramètre,
- comparaison (170) dudit code de redondance cyclique courant associé au micro-motif courant (116), à un code de redondance cyclique de référence associé à un micro-motif de référence obtenu et stocké au préalable dans un espace mémoire dédié au sein dudit dispositif électronique de surveillance pour une valeur sensiblement identique dudit paramètre à un seuil de tolérance près propre audit paramètre,
- en cas d'écart de valeur de code de redondance cyclique, entre ledit code de redondance cyclique courant associé à un micro-motif courant (116) et ledit code de redondance cyclique de référence associé à un micro-motif de référence, sanction (172) automatique de ladite première chaine de calcul graphique et d'affichage par mise en oeuvre d'au moins une suspension de son exécution.

2. Procédé (150) selon la revendication 1, dans lequel ledit micro-motif (116) courant, est configuré pour être affiché dans une zone (66) du premier écran non visible d'un pilote dudit aéronef.

3. Procédé (150) selon la revendication 1 ou 2, comprenant en outre au préalable, pour ledit au moins un paramètre de ladite pluralité :
- la réception (152) de la valeur courante et dynamique dudit paramètre, reçue par le module d'acquisition de ladite première chaine de calcul graphique, en provenance directe d'un capteur appartenant à une pluralité de capteurs dudit aéronef,
- la réception (154) d'au moins un code de redondance cyclique encapsulant une valeur dudit paramètre, reçue, puis transmise audit dispositif électronique de surveillance, par ledit module d'acquisition de ladite première chaine de calcul graphique et d'affichage, en provenance d'une chaine de calcul graphique et d'affichage associée à un écran de visualisation dudit cockpit d'aéronef distinct dudit premier écran de visualisation, et
- la vérification (156) de ladite valeur courante et dynamique dudit paramètre par détermination de l'écart entre:
+ la valeur courante et dynamique dudit paramètre, reçue par le module d'acquisition de ladite première chaine de calcul graphique, en provenance directe d'un capteur appartenant à une pluralité de capteurs dudit aéronef, et
+ au moins une valeur associée dudit paramètre, déterminée respectivement à partir dudit au moins un code de redondance cyclique encapsulant une valeur dudit paramètre ;
- en cas d'écart supérieur à un premier seuil prédéterminé de valeur dudit paramètre résultant de ladite détermination d'écart, sanction (160) automatique de ladite première chaine de calcul graphique et d'affichage par mise en oeuvre d'au moins une suspension de son exécution.

4. Procédé (150) selon la revendication 3, dans lequel la vérification (156) met en oeuvre un vote (158) lorsqu'au moins deux codes de redondance cyclique encapsulant une valeur d'un même paramètre sont reçus sensiblement simultanément en provenance d'au moins deux chaines distinctes de calcul graphique et d'affichage associées respectivement à au moins deux écrans de visualisation distincts dudit cockpit d'aéronef et distincts dudit premier écran de visualisation.

5. Procédé (150) selon la revendication 3 ou 4, comprenant en outre :
- la réception (178) de la valeur dudit paramètre déterminée pour affichage par le module de calcul de ladite première chaine de calcul graphique à partir de la valeur courante et dynamique dudit paramètre, reçue par le module d'acquisition de ladite première chaine de calcul graphique,
- la comparaison (176) de la valeur dudit paramètre déterminée pour affichage et de la valeur courante et dynamique dudit paramètre, reçue par le module d'acquisition de ladite première chaine de calcul graphique, en provenance directe d'un capteur appartenant à une pluralité de capteurs dudit aéronef, et en cas d'écart supérieur à un deuxième seuil prédéterminé de valeur dudit paramètre, sanction (180) automatique de ladite première chaine de calcul graphique et d'affichage par mise en oeuvre d'au moins une suspension de son exécution.

6. Procédé (150) selon l'une quelconque des revendications précédentes, comprenant en outre, préalablement à l'obtention d'un code de redondance cyclique courant associé à un micro-motif courant généré par exécution de ladite au moins une liste de commandes graphiques dupliquée associée audit au moins un paramètre, une étape (162) de détermination d'une valeur de référence approchée de la valeur courante et dynamique dudit au moins un paramètre, en fonction dudit seuil de tolérance propre audit au moins un paramètre.

7. Programme d'ordinateur comportant des instructions logicielles qui lorsqu'elles sont exécutées par un ordinateur, mettent en oeuvre un procédé de surveillance de l'exécution d'une première chaine de calcul graphique et d'affichage associée à un premier écran de visualisation de cockpit d'aéronef selon l'une quelconque des revendications précédentes.

8. Dispositif (88) électronique de surveillance de l'exécution d'une première chaine de calcul graphique et d'affichage associée à un premier écran de visualisation de cockpit d'aéronef, le cockpit d'aéronef comprenant une pluralité d'écrans de visualisation distincts, chacun associé à une chaine (78) de calcul graphique et d'affichage, chaque chaine de calcul graphique et d'affichage comprenant :
- un module d'acquisition (82) configuré pour acquérir et calculer une pluralité de paramètres d'entrée/sortie de ladite première chaine de calcul graphique,
- un module de calcul (96) configuré pour déterminer, pour chaque paramètre de ladite pluralité, au moins une liste de commandes graphiques propre à générer une symbologie associée à représenter,
- un module graphique (112) configuré pour générer une image comprenant la symbologie associée à chaque paramètre, à partir de ladite au moins une liste de commandes graphiques respectivement associée à chaque paramètre de ladite pluralité,
- un module d'affichage configuré pour afficher ladite image (114) comprenant la symbologie associée à chaque paramètre, sur l'écran de visualisation associé à ladite chaine de calcul graphique et d'affichage,
le dispositif électronique de surveillance (88) étant associé localement à ladite première chaîne (78) de calcul graphique et d'affichage, et, pour au moins un paramètre de ladite pluralité, étant configuré pour :
+ dupliquer et insérer ladite au moins une liste de commandes graphiques associée audit paramètre au sein dudit module de calcul,
+ à partir d'une valeur courante et dynamique dudit paramètre, obtenir un code de redondance cyclique courant associé à un micro-motif courant généré par exécution de ladite au moins une liste de commandes graphiques dupliquée associée audit paramètre,
+ comparer ledit code de redondance cyclique courant associé au micro-motif courant, à un code de redondance cyclique de référence associé à un micro-motif de référence obtenu et stocké au préalable dans un espace mémoire dédié au sein dudit dispositif électronique de surveillance pour une valeur sensiblement identique dudit paramètre à un seuil de tolérance près propre audit paramètre,
+ en cas d'écart de code de redondance cyclique, entre ledit code de redondance cyclique courant associé à un micro-motif courant et ledit code de redondance cyclique de référence associé à un micro-motif de référence, sanctionner automatiquement ladite première chaine de calcul graphique et d'affichage par mise en oeuvre d'au moins une suspension de son exécution.

9. Equipement avionique (72) d'aéronef comprenant :
- une première chaine de calcul graphique et d'affichage associée à un premier écran de visualisation de cockpit d'aéronef, le cockpit d'aéronef comprenant une pluralité d'écrans de visualisation distincts, chacun associé à une chaine de calcul graphique et d'affichage, chaque chaine de calcul graphique et d'affichage comprenant :
- un module d'acquisition configuré pour acquérir et calculer une pluralité de paramètres d'entrée/sortie de ladite première chaine de calcul graphique,
- un module de calcul configuré pour déterminer, pour chaque paramètre de ladite pluralité, au moins une liste de commandes graphiques propre à générer une symbologie associée à représenter,
- un module graphique configuré pour générer une image comprenant la symbologie associée à chaque paramètre, à partir de ladite au moins une liste de commandes graphiques respectivement associée à chaque paramètre de ladite pluralité,
- un module d'affichage configuré pour afficher ladite image comprenant la symbologie associée à chaque paramètre, sur l'écran de visualisation associé à ladite chaine de calcul graphique et d'affichage, et
- un dispositif de surveillance (88) de l'exécution de ladite première chaine de calcul graphique et d'affichage selon la revendication 8,
- un module d'alimentation (121) à découpage, dont au moins le circuit secondaire est configuré pour fournir une alimentation indépendante ségrégée et/ou configuré pour fournir une tension d'alimentation de valeur distincte entre ladite première chaine de calcul graphique et ledit dispositif de surveillance, et comprenant un élément de surveillance de ladite alimentation ségrégée et/ou tension configuré pour suspendre ladite alimentation en cas d'écart entre une alimentation courante et une alimentation attendue préalablement stockée au sein dudit élément de surveillance dudit module d'alimentation.

10. Aéronef comprenant un dispositif électronique (88) de surveillance selon la revendication 8 ou un équipement avionique (72) selon la revendication 9.

## Patentansprüche

1. Verfahren (150) zum Überwachen der Ausführung einer ersten Grafik- und Anzeigeberechnungskette (78), die mit einem ersten Anzeigebildschirm eines Flugzeugcockpits assoziiert ist, das Flugzeugcockpit umfassend eine Vielzahl von Grafik- und Anzeigeberechnungsketten, die jeweils mit einer Grafik- und Anzeigeberechnungskette assoziiert sind, jede Grafik- und Anzeigeberechnungskette mindestens umfassend:
+ ein Erfassungsmodul (82), das konfiguriert ist, um eine Vielzahl von Eingabe- /Ausgabeparametern der ersten Grafikberechnungskette zu erfassen und zu berechnen,
+ ein Berechnungsmodul (96), das konfiguriert ist, um für jeden Parameter aus der Vielzahl mindestens eine Liste von Grafikbefehlen zu bestimmen, die geeignet sind, um eine assoziierte darzustellende Symbologie zu erzeugen,
+ ein Grafikmodul (112), das konfiguriert ist, um ein Bild zu erzeugen, umfassend die Symbologie, die mit jedem Parameter assoziiert ist, anhand derer mindestens eine Liste von Grafikbefehlen, die jeweils mit jedem Parameter der Vielzahl assoziiert sind,
+ ein Anzeigemodul, das konfiguriert ist, um das Bild (114), umfassend die mit jedem Parameter assoziierte Symbologie, auf dem Anzeigebildschirm anzuzeigen, der mit der Grafik- und Anzeigeberechnungskette assoziiert ist,
wobei das Verfahren (150) von einer elektronischen Überwachungsvorrichtung (88) implementiert wird, das lokal mit der ersten Grafikberechnungs- und Anzeigekette (78) assoziiert ist, das Verfahren umfassend für mindestens einen Parameter der Vielzahl die folgenden Schritte:
- Duplizieren und Einfügen (164) der mindestens einen Liste grafischer Befehle, die mit dem Parameter assoziiert sind, innerhalb des Berechnungsmoduls,
- anhand eines aktuellen und dynamischen Werts des Parameters, Erlangen (168) eines aktuellen zyklischen Redundanzcodes, der mit einem aktuellen Mikromuster assoziiert ist, das durch Ausführen der mindestens einen duplizierten Liste von Grafikbefehlen erzeugt wird, die mit dem Parameter assoziiert sind,
- Vergleichen (170) des aktuellen zyklischen Redundanzcodes, der mit dem aktuellen Mikromuster (116) assoziiert ist, mit einem zyklischen Referenz-Redundanzcode, der mit einem Referenz-Mikromuster assoziiert ist, der zuvor in einem dedizierten Speicherbereich innerhalb der elektronischen Überwachungsvorrichtung für einen im Wesentlichen identischen Wert des Parameters bis auf eine Toleranzschwelle, die dem Parameter eigen ist, erlangt und gespeichert wurde,
- im Fall einer Abweichung des Werts des zyklischen Redundanzcodes zwischen dem aktuellen zyklischen Redundanzcode, der mit einem aktuellen Mikromuster (116) assoziiert ist, und dem zyklischen Referenz-Redundanzcode, der mit dem aktuellen Mikromuster assoziiert ist, automatisches Sanktionieren (172) der ersten Grafik- und Anzeigeberechnungskette durch Implementieren von mindestens einer Aussetzung ihrer Ausführung.

2. Verfahren (150) nach Anspruch 1, wobei das aktuelle Mikromuster (116) konfiguriert ist, um in einem Bereich (66) des ersten Bildschirms angezeigt zu werden, der für einen Piloten des Flugzeugs nicht sichtbar ist.

3. Verfahren (150) nach Anspruch 1 oder 2, ferner vorab umfassend für den mindestens einen Parameter der Vielzahl:
- Empfangen (152) des aktuellen und dynamischen Werts des Parameters, der von dem Erfassungsmodul der ersten Grafikberechnungskette empfangen wird, der direkt von einem Sensor stammt, der zu einer Vielzahl von Sensoren des Luftfahrzeugs gehört,
- Empfangen (154) mindestens eines zyklischen Redundanzcodes, der einen Wert des Parameters einkapselt, der von dem Erfassungsmodul der ersten Grafikberechnungs- und Anzeigekette von einer Grafikberechnungs- und Anzeigekette empfangen und dann an die elektronische Überwachungsvorrichtung übertragen wird, die mit einem Anzeigebildschirm des Flugzeugcockpits assoziiert ist, der sich von dem ersten Anzeigebildschirm unterscheidet, und
- Überprüfen (156) des aktuellen und dynamischen Werts des Parameters durch Bestimmen einer Abweichung zwischen:
+ dem aktuellen und dynamischen Wert des Parameters, der von dem Erfassungsmodul der ersten Grafikberechnungskette empfangen wird, der direkt von einem Sensor stammt, der zu einer Vielzahl von Sensoren des Luftfahrzeugs gehört, und
+ mindestens einem assoziierten Wert des Parameters, der jeweils aus dem mindestens einen zyklischen Redundanzcode bestimmt wird, der einen Wert des Parameters einkapselt;
- bei einer Abweichung, die größer ist als ein erster vorbestimmter Schwellenwert des Werts des Parameters, der aus der Bestimmung der Abweichung resultiert, automatisches Sanktionieren (160) der ersten Grafikberechnungs- und Anzeigekette durch Implementieren von mindestens einer Aussetzung ihrer Ausführung.

4. Verfahren (150) nach Anspruch 3, wobei die Überprüfung (156) eine Abstimmung (158) implementiert, wenn mindestens zwei zyklische Redundanzcodes, die einen Wert desselben Parameters einkapseln, im Wesentlichen gleichzeitig von mindestens zwei verschiedenen Grafikberechnungs- und Anzeigeketten empfangen werden, die jeweils mit mindestens zwei verschiedenen Anzeigebildschirmen des Flugzeugcockpits assoziiert sind und sich von dem ersten Anzeigebildschirm unterscheiden.

5. Verfahren (150) nach Anspruch 3 oder 4, ferner umfassend:
- Empfangen (178) des Werts des Parameters, der für die Anzeige durch das Berechnungsmodul der ersten grafischen Berechnungskette anhand des aktuellen und dynamischen Werts des Parameters bestimmt wurde, der durch das Erfassungsmodul der ersten grafischen Berechnungskette empfangen wurde,
- den Vergleich (176) des Werts des zur Anzeige bestimmten Parameters mit dem aktuellen und dynamischen Wert des Parameters, der von dem Erfassungsmodul der ersten grafischen Berechnungskette empfangen wird und direkt von einem Sensor stammt, der zu einer Vielzahl von Sensoren des Luftfahrzeugs gehört, und bei einer Abweichung, die größer ist als ein zweiter vorbestimmter Schwellenwert des Werts des Parameters, automatisches Sanktionieren (180) der ersten Grafikberechnungs- und Anzeigekette durch Implementieren mindestens einer Aussetzung ihrer Ausführung.

6. Verfahren (150) nach einem der vorherigen Ansprüche, ferner umfassend vor Erlangen eines aktuellen zyklischen Redundanzcodes, der mit einem aktuellen Mikromuster assoziiert ist, das durch Ausführen der mindestens einen duplizierten Liste von Grafikbefehlen erzeugt wird, die mit dem mindestens einen Parameter assoziiert sind, einen Schritt (162) eines Bestimmens eines annähernden Referenzwerts des aktuellen und dynamischen Werts des mindestens einen Parameters abhängig von der Toleranzschwelle, die dem mindestens einen Parameter eigen ist.

7. Computerprogramm, umfassend Softwareanweisungen, die, wenn sie von einem Computer ausgeführt werden, ein Verfahren zum Überwachen der Ausführung einer ersten Grafikberechnungs- und Anzeigekette implementieren, die mit einem ersten Bildschirm zur Anzeige eines Flugzeugcockpits nach einem der vorherigen Ansprüche assoziiert ist.

8. Elektronische Vorrichtung (88) zum Überwachen der Ausführung einer ersten Grafik- und Anzeigeberechnungskette, die mit einem ersten Anzeigebildschirm eines Flugzeugcockpits assoziiert ist, das Flugzeugcockpit umfassend eine Vielzahl von Grafik- und Anzeigeberechnungsketten, die jeweils mit einer Grafik- und Anzeigeberechnungskette (78) assoziiert sind, jede Grafik- und Anzeigeberechnungskette umfassend:
- ein Erfassungsmodul (82), das konfiguriert ist, um eine Vielzahl von Eingabe- /Ausgabeparametern der ersten Grafikberechnungskette zu erfassen und zu berechnen,
- ein Berechnungsmodul (96), das konfiguriert ist, um für jeden Parameter aus der Vielzahl mindestens eine Liste von Grafikbefehlen zu bestimmen, die geeignet sind, um eine assoziierte zugehörige darzustellende Symbologie zu erzeugen,
- ein Grafikmodul (112), das konfiguriert ist, um ein Bild zu erzeugen, umfassend die Symbologie, die mit jedem Parameter assoziiert ist, anhand derer mindestens eine Liste von Grafikbefehlen, die jeweils mit jedem Parameter der Vielzahl assoziiert sind,
- ein Anzeigemodul, das konfiguriert ist, um das Bild (114), umfassend die mit jedem Parameter assoziierte Symbologie, auf dem Anzeigebildschirm anzuzeigen, der mit der Grafik- und Anzeigeberechnungskette assoziiert ist,
wobei die elektronische Überwachungsvorrichtung (88) lokal mit der ersten Grafikberechnungs- und Anzeigekette (78) assoziiert ist und für mindestens einen Parameter der Vielzahl zu Folgendem konfiguriert ist:
+ Duplizieren und Einfügen der mindestens einen Liste grafischer Befehle, die mit dem Parameter assoziiert sind, innerhalb des Berechnungsmoduls,
+ anhand eines aktuellen und dynamischen Werts des Parameters, Erlangen eines aktuellen zyklischen Redundanzcodes, der mit einem aktuellen Mikromuster assoziiert ist, das durch Ausführen der mindestens einen duplizierten Liste von Grafikbefehlen erzeugt wird, die mit dem Parameter assoziiert sind,
+ Vergleichen des aktuellen zyklischen Redundanzcodes, der mit dem aktuellen Mikromuster assoziiert ist, mit einem zyklischen Referenz-Redundanzcode, der mit einem Referenz-Mikromuster assoziiert ist, der zuvor in einem dedizierten Speicherbereich innerhalb der elektronischen Überwachungsvorrichtung für einen im Wesentlichen identischen Wert des Parameters bis auf eine Toleranzschwelle, die dem Parameter eigen ist, erlangt und gespeichert wurde,
+ im Fall einer Abweichung des Werts des zyklischen Redundanzcodes zwischen dem aktuellen zyklischen Redundanzcode, der mit einem aktuellen Mikromuster assoziiert ist, und dem zyklischen Referenz-Redundanzcode, der mit dem aktuellen Mikromuster assoziiert ist, automatisches Sanktionieren der ersten Grafik- und Anzeigeberechnungskette durch Implementieren von mindestens einer Aussetzung ihrer Ausführung.

9. Avionikausrüstung (72) eines Luftfahrzeugs, umfassend:
- eine erste Grafik- und Anzeigeberechnungskette, die mit einem ersten Anzeigebildschirm eines Flugzeugcockpits assoziiert ist, das Flugzeugcockpit umfassend eine Vielzahl von Grafik- und Anzeigeberechnungsketten, die jeweils mit einer Grafik- und Anzeigeberechnungskette assoziiert sind, jede Grafik- und Anzeigeberechnungskette umfassend:
- ein Erfassungsmodul, das konfiguriert ist, um eine Vielzahl von Ein- /Ausgangsparametern der ersten Grafikberechnungskette zu erfassen und zu berechnen,
- ein Berechnungsmodul, das konfiguriert ist, um für jeden Parameter aus der Vielzahl mindestens eine Liste von Grafikbefehlen zu bestimmen, die geeignet sind, um eine assoziierte zugehörige darzustellende Symbologie zu erzeugen,
- ein Grafikmodul, das konfiguriert ist, um ein Bild zu erzeugen, umfassen die Symbologie, die mit jedem Parameter assoziiert ist, anhand derer mindestens eine Liste von Grafikbefehlen, die jeweils mit jedem Parameter der Vielzahl assoziiert sind,
- ein Anzeigemodul, das konfiguriert ist, um das Bild, umfassend die mit jedem Parameter assoziierte Symbologie, auf dem Anzeigebildschirm anzuzeigen, der mit der Grafik- und Anzeigeberechnungskette assoziiert ist, und
- eine Überwachungsvorrichtung (88) der Ausführung der ersten Grafikberechnungs- und Anzeigekette nach Anspruch 8,
- ein getaktetes Versorgungsmodul (121), wovon mindestens die Sekundärschaltung konfiguriert ist, um eine unabhängige Stromversorgung bereitzustellen, die segregiert und/oder konfiguriert ist, eine Versorgungsspannung mit einem unterschiedlichen Wert zwischen der ersten Grafikberechnungskette und der Überwachungsvorrichtung bereitzustellen, und umfassend ein Überwachungselement für die segregierte Stromversorgung und/oder Spannung, das konfiguriert ist, um die Stromversorgung im Fall einer Abweichung zwischen einer aktuellen Stromversorgung und einer erwarteten Stromversorgung, die zuvor innerhalb des Überwachungselements des Versorgungsmoduls gespeichert wurde, zu unterbrechen.

10. Luftfahrzeug, umfassend eine elektronische Überwachungsvorrichtung (88) nach Anspruch 8 oder eine Avionikausrüstung (72) nach Anspruch 9.

## Claims

1. A method (150) for monitoring the execution of a first graphical calculation and display chain (78) associated with a first aircraft cockpit display screen, the aircraft cockpit comprising a plurality of distinct display screens, each associated with a graphical calculation and display chain, each graphical calculation and display chain comprising at least:
+ an acquisition module (82) configured to acquire and calculate a plurality of input/output parameters of said first graphical calculation chain,
+ a calculation module (96) configured to determine at least one list of graphical commands able to generate an associated symbology to be represented, for each parameter of said plurality,
+ a graphical module (112) configured to generate an image comprising the symbology associated with each parameter, from said at least one list of graphical commands respectively associated with each said plurality parameter,
+ a display module configured to display said image (114) comprising the symbology associated with each parameter, on the display screen associated with said graphical calculation and display chain,
the method (150) being implemented by an electronic monitoring device (88) associated locally with said first graphical calculation and display chain (78), the method comprising the following steps, for at least one parameter of said plurality:
- duplicating and inserting (164) said at least one list of graphical commands associated with said parameter within said calculation module,
- from a current and dynamic value of said parameter, obtaining (168) a current cyclic redundancy code associated with a current micropattern generated by executing said at least one duplicated list of graphical commands associated with said parameter,
- comparing (170) said current cyclic redundancy code associated with the current micropattern (116) with a reference cyclic redundancy code associated with a reference micropattern obtained and stored beforehand in a dedicated memory space within the said electronic monitoring device, for a substantially identical value of the said parameter, to within a tolerance threshold specific to the said parameter,
- in the event of a difference in the cyclic redundancy code value, between the said current cyclic redundancy code associated with a current micropattern (116) and the said reference cyclic redundancy code associated with a reference micropattern, automatic sanctioning (172) of the said first graphical calculation and display chain by implementing at least one suspension of its execution.

2. The method (150) according to claim 1, wherein said current micropattern is configured to be displayed in an area of the first screen not visible to a pilot of said aircraft.

3. The method (150) according to claim 1 or 2, further comprising, beforehand, for said at least one parameter of said plurality:
- receiving (152) the current and dynamic value of said parameter, received directly from a sensor belonging to a plurality of sensors of said aircraft, by the acquisition module of said first graphical calculation chain,
- receiving (154) at least one cyclic redundancy code, encapsulating a value of the said parameter, received and then transmitted to the said electronic monitoring device by the said acquisition module of the said first graphical calculation and display chain, coming from a graphical calculation and display chain associated with a display screen of the said aircraft cockpit distinct from the said first display screen, and
- verifying (156) said current and dynamic parameter value by determining the difference between:
+ the current and dynamic value of said parameter received directly from a sensor belonging to a plurality of sensors of said aircraft by the acquisition module of said first graphical calculation chain, and
+ at least one associated value of said parameter respectively determined from said at least one cyclic redundancy code encapsulating a value of said parameter;
- in the event of a difference greater than a first predetermined threshold value of said parameter resulting from said difference determination, automatic sanctioning (160) of said first graphical calculation and display chain by implementing at least one suspension of its execution.

4. The method (150) according to claim 3, in which the verification (156) implements a vote (158) when at least two cyclic redundancy codes encapsulating a value of a same parameter are received substantially simultaneously from at least two distinct graphical calculation and display chains respectively associated with at least two distinct display screens of said aircraft cockpit and distinct from said first display screen.

5. The method (150) according to claim 3 or 4, further comprising:
- receiving (178) the said parameter value determined for display by the calculation module of said first graphical calculation chain from the current and dynamic value of said parameter, received by the acquisition module of said first graphical calculation chain,
- comparing (176) the said parameter value determined for display and the current and dynamic parameter value received by the acquisition module of the said first graphical calculation chain, coming directly from a sensor belonging to a plurality of sensors of the said aircraft, and, in the event of a difference greater than a second predetermined threshold value of the said parameter, automatic sanctioning (180) of the said first graphical calculation and display chain by implementing at least one suspension of its execution.

6. The method (150) according to any one of the preceding claims, further comprising a step, prior to obtaining a current cyclic redundancy code associated with a current micropattern generated by execution of said at least one duplicated graphical command list associated with said at least one parameter, of determining (162) an approximate reference value of the current and dynamic value of said at least one parameter based on said tolerance threshold specific to said at least one parameter.

7. A a computer program having software instructions that implements a monitoring method according to any one of the preceding claims when executed by a computer.

8. An electronic device (88) for monitoring the execution of a first graphical calculation and display chain associated with a first aircraft cockpit display screen, the aircraft cockpit comprising a plurality of distinct display screens, each associated with a graphical calculation and display chain (78), each graphical calculation and display chain comprising:
- an acquisition module (82) configured to acquire and calculate a plurality of input/output parameters of said first graphical calculator chain,
- a calculation module (96) configured to determine at least one list of graphical commands able to generate an associated symbology to be represented, for each parameter of said plurality,
- a graphical module (112) configured to generate an image comprising the symbology associated with each parameter from said at least one list of graphical commands respectively associated with each parameter of said plurality,
- a display module configured to display said image (114) comprising the symbology associated with each parameter on the display screen associated with said graphical calculation and display chain,
Said electronic monitoring device (88) being locally associated with said first graphical calculation and display chain (78), and, for at least one parameter of said plurality, configured to:
+ duplicate and insert said at least one list of graphical commands associated with said parameter within said calculation module,
+ from a current and dynamic value of said parameter, obtain a current cyclic redundancy code associated with a current micropattern generated by execution of said at least one duplicated list of graphical commands associated with said parameter,
+ compare said current cyclic redundancy code associated with the current micropattern with a reference cyclic redundancy code associated with a reference micropattern obtained and stored beforehand in a dedicated memory space within said electronic monitoring device, for a substantially identical value of said parameter, to within a tolerance threshold specific to said parameter,
+ in the event of a difference in cyclic redundancy code between said current cyclic redundancy code associated with a current micropattern and said reference cyclic redundancy code associated with a reference micropattern, automatically sanctioning said first graphical calculation and display chain by implementing at least one suspension of its execution.

9. An aircraft avionics equipment (72) comprising:
- a first graphical calculation and display chain associated with a first aircraft cockpit display screen, the aircraft cockpit comprising a plurality of distinct display screens, each associated with a graphical calculation and display chain, each graphical calculation and display chain comprising:
- an acquisition module configured to acquire and calculate a plurality of input/output parameters of said first graphical calculation chain,
- a calculation module configured to determine at least one list of graphical commands able to generate an associated symbology to be represented, for each parameter of said plurality,
- a graphical module configured to generate an image comprising the symbology associated with each parameter from said at least one list of graphical commands respectively associated with each parameter of said plurality,
- a display module configured to display said image comprising the symbology associated with each parameter, on the display screen associated with said graphical and display calculation chain, and
- a device (88) for monitoring the execution of said first graphical calculation and display chain according to claim 8,
- a switching power supply module (121), at least the secondary circuit of which is configured to provide an independent segregated power supply and/or to provide a supply voltage of distinct value between said first graphical calculation chain and said monitoring device, and comprising a monitoring element of said segregated power supply and/or voltage configured to suspend said power supply in case of difference between a current power supply and an expected power supply previously stored within said monitoring element of said power supply module.

10. An aircraft comprising one electronic monitoring device (88) element according to claim 8 or an avionics equipment (72) according to claim 9.
